(19) Europäisches Patentamt
European Patent Office
Office européen des brevets

(11) **EP 3 835 376 B1**

(12) **EUROPEAN PATENT SPECIFICATION**

(45) Date of publication and mention
of the grant of the patent:
**18.03.2026 Bulletin 2026/12**

(21) Application number: **19846670.8**

(22) Date of filing: **26.07.2019**

(51) International Patent Classification (IPC):
**C09D 11/106** (2014.01)  **C09D 11/38** (2014.01)
**B41J 2/01** (2006.01)  **B41M 5/00** (2006.01)
**C09D 11/322** (2014.01)  **C09D 11/107** (2014.01)
**C09D 11/102** (2014.01)  **C09D 11/40** (2014.01)

(52) Cooperative Patent Classification (CPC):
**C09D 11/106; C09D 11/102; C09D 11/107;
C09D 11/322; C09D 11/38; C09D 11/40**

(86) International application number:
**PCT/JP2019/029386**

(87) International publication number:
**WO 2020/031746 (13.02.2020 Gazette 2020/07)**

(54) **AQUEOUS INK FOR INKJET RECORDING**

WÄSSRIGE TINTE FÜR TINTENSTRAHLAUFZEICHNUNG

ENCRE AQUEUSE POUR ENREGISTREMENT PAR JET D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2018 JP 2018150697**

(43) Date of publication of application:
**16.06.2021 Bulletin 2021/24**

(73) Proprietor: **Kao Corporation
Tokyo 103-8210 (JP)**

(72) Inventors:
• **NAGANO, Tomohiko**
**Wakayama-shi, Wakayama 640-8580 (JP)**
• **FUKUDA, Teruyuki**
**Wakayama-shi, Wakayama 640-8580 (JP)**

• **MAEDA, Takahiro**
**Wakayama-shi, Wakayama 640-8580 (JP)**

(74) Representative: **Hoffmann Eitle
Patent- und Rechtsanwälte PartmbB
Arabellastraße 30
81925 München (DE)**

(56) References cited:
| | |
|---|---|
| WO-A1-2006/064193 | WO-A1-2011/051711 |
| WO-A1-2017/009601 | WO-A1-2018/138720 |
| JP-A- 2007 514 809 | JP-A- 2015 193 788 |
| JP-A- 2015 193 788 | JP-A- 2016 064 574 |
| JP-A- 2016 064 574 | JP-A- 2018 070 827 |
| JP-A- 2018 080 255 | US-A1- 2004 242 726 |
| US-A1- 2006 293 410 | US-A1- 2009 226 682 |
| US-A1- 2013 260 114 | US-A1- 2018 118 965 |
| US-A1- 2019 382 606 | |

**Description**

FIELD OF THE INVENTION

The present invention relates to a water-based ink for ink-jet printing, an ink set for ink-jet printing, and an ink-jet printing method.

BACKGROUND OF THE INVENTION

From the viewpoint of improving water resistance and weathering resistance of a printed material, there has been proposed an ink using not a dye but a pigment as a colorant. However, when printing characters or images on a low-ink absorbing printing medium such as a coated paper or a resin film, etc., using such a pigment ink, pigment particles tend to remain on a surface of the printing medium after the printing. For this reason, there tends to occur such a problem that when any stimulus is applied to a surface of the printed material, the pigment particles are likely to be peeled off from the printing medium. To solve the problem, ultraviolet-curable inks (UV inks) have been proposed.

In ordinary UV inks, a pigment is dispersed in a monomer, and after printing characters or images using the inks, the monomer component contained in the inks is polymerized by irradiation of ultraviolet rays thereto, whereby it is possible to obtain a printed material having high image fastness. However, the UV inks have posed various problems such as poor working environments owing to peculiar odor of the monomer used or less safety owing to migration of the monomer or a polymerization initiator exuded from the printed material.

In consequence, in order to improve image fastness of the obtained printed material using a water-based pigment ink having high safety, there has been developed a water-based pigment ink containing a carbodiimide, or an aqueous composition such as a coating solution, etc., which can be used in combination with the ink.

For example, JP 2007-514809A (Patent Literature 1) aims at enhancing durability of images printed on a plain paper or a fabric or cloth, and discloses an ink-jet ink including a vehicle and a carbodiimide group-containing component dispersed and/or dissolved in the vehicle, in which the ink contains an aqueous vehicle as the vehicle and a colorant dispersed in the aqueous vehicle with a polymer dispersant. In addition, in Examples of the Patent Literature 1, there are also described a block copolymer constituted of methacrylic acid/benzyl methacrylate/ethyl triethylene glycol methacrylate (13/15/4) and a graft copolymer constituted of phenoxyethyl acrylate-g-ethoxy-triethylene glycol methacrylate-co-methacrylic acid (66/4/30) which act as the polymer dispersant.

JP 2015-193788A (Patent Literature 2) aims at obtaining images that exhibit high gloss and are excellent in substrate adhesion properties, rub fastness, etc., and discloses an ink-jet ink containing a pigment, an organic solvent, a polycarbonate-based urethane resin and water and further containing a carbodiimide compound.

US 2009/226682 A1 (Patent Literatures 3) describes an ink composition that includes a dispersion element having an average particle diameter of 50 nm to 300 nm, which allows a pigment to be dispersed in water; polymer fine particles synthesized using at least alkyl(meth)acrylate and/or cyclic alkyl(meth)acrylate as components thereof, having a glass transition temperature of -10°C or below and having an acid value of 100 mgKOH/g or less; and a reactant.

WO 2018/138720 A1 (Patent Literature 4) describes an ink-set comprising an immobilizing composition and at least one ink composition, said ink composition comprises a dispersed pigment and/or dye, a low-temperature curing self-crosslinking resin and an aqueous carrier, and formulated to exhibit an alkaline pH higher than 7, said immobilizing composition comprises an acid and an aqueous carrier, and formulated to exhibit an acidic pH lower than 7.

WO 2017/009601 A1 (Patent Literature 5) describes a method for printing on a water-soluble material which comprises the following steps: a) ink jet printing an ink onto a water-soluble material so as to form an image wherein the ink comprises a self-dispersible pigment which comprises a carboxy-functional dispersant crosslinked around a pigment core by a cross-linking agent having at least two groups selected from oxetane, carbodiimide, hydrazide, oxazoline, aziridine, isocyanate, N-methylol, keteneimine, isocyanurate and epoxy groups; b) overprinting the image formed in step A) with a water soluble overprint varnish.

US 2018/118965 A1 (Patent Literature 6) describes an aqueous inkjet ink that includes at least water, a coloring material, a water-soluble organic solvent component, a silicone-based surfactant, resin microparticles that include a functional group reactive with a carbodiimide group, and a water-soluble carbodiimide compound that acts as a cross-linking component.

WO 2006/064193 A1 (Patent Literature 7) describes a process for preparing an encapsulated particulate solid using an epoxy functional cross-linking agent and a carboxylic acid functional dispersant wherein the cross-linking agent has one or more oligomeric dispersing group and/or the dispersant has an acid value of at least 125 mg KOH/g. The resultant solids are said to be useful in ink jet printing inks.

WO 2011051711A1 (Patent Literature 8) describes a process for printing an image on a substrate comprising the steps of: (a) applying an ink comprising polymer-encapsulated pigment particles and an aqueous medium to a substrate by means of an ink jet printer, wherein (i) the said particles are dispersed in the aqueous medium, and (ii) the said particles comprise a carboxy-functional dispersant crosslinked around a pigment core by a first crosslinking agent; and (b) crosslinking the polymer-encapsulated pigment particles with a second crosslinking agent.

SUMMARY OF THE INVENTION

The present invention relates to a water-based ink for ink-jet printing as defined in the appended claims, containing a carbodiimide compound, a pigment, a vinyl polymer and water, in which the vinyl polymer is a carboxyl group-containing polymer having an acid value of not more than 70 mgKOH/g, the vinyl polymer comprises a constitutional unit derived from an ionic monomer and a constitutional unit derived from a hydrophobic monomer, wherein the hydrophobic monomer is at least an aromatic group-containing monomer, the vinyl polymer is in the form of a crosslinked polymer, and the pigment and the vinyl polymer are present in the form of pigment-containing polymer particles.

DETAILED DESCRIPTION OF THE INVENTION

In the technologies described in the aforementioned Patent Literatures 1 and 2, when conducting the printing on a non-water absorbing printing medium such as a resin film, etc., the resulting printed material tends to be insufficient in rub fastness.
In addition, in the Patent Literature 2, although there is described the technology concerning a coating film obtained using a polycarbonate-based urethane resin, any studies on the use of a vinyl polymer have not been made therein.
The ink-jet printing method is more suitable for production of a small number but many kinds of printed materials than analog printing methods such as a gravure printing method, etc., and therefore it has been demanded to apply the ink-jet printing method to a still wider range of printing media. With the increase in kinds of printing media to which the ink-jet printing method is applied, in the commercial or industrial printing application fields using printing media such as a coated paper or a resin film, it has been required that the resulting printed material is further improved, in particular, in rub fastness.
In addition, as a packaging substrate for containers used, for example, in food or medical application fields, such as a PET bottle and a plastic case, etc., there have been widely used heat-shrinkable resin films. Such a packaging substrate can be used for printing not only package designs, but also important information including product information such as statements of efficacy, usage, best-before date, lot number, etc., thereon. For this reason, it has also been required that even those printed materials using the heat-shrinkable resin films are improved in rub fastness.
The present invention relates to a water-based ink for ink-jet printing which is capable of providing a printed material that is excellent in rub fastness, an ink set for ink-jet printing and an ink-jet printing method.
The present inventors have found that a water-based ink that contains a carbodiimide compound and is formed by dispersing a pigment therein with a vinyl polymer having a comparatively low acid value is capable of improving rub fastness of a printed material obtained by an ink-jet printing method using the water-based ink.
That is, the present invention relates to the following [1] to [3] as defined in the appended claims.

[1] A water-based ink for ink-jet printing, containing a carbodiimide compound, a pigment, a vinyl polymer and water, in which the vinyl polymer is a carboxyl group-containing polymer having an acid value of not more than 70 mgKOH/g, the vinyl polymer comprises a constitutional unit derived from an ionic monomer and a constitutional unit derived from a hydrophobic monomer, wherein the hydrophobic monomer is at least an aromatic group-containing monomer, the vinyl polymer is in the form of a crosslinked polymer, and the pigment and the vinyl polymer are present in the form of pigment-containing polymer particles.
[2] An ink set for ink-jet printing, containing an aqueous composition containing a carbodiimide compound and water, and a water-based ink containing a pigment and a vinyl polymer, in which:

the vinyl polymer is a carboxyl group-containing polymer having an acid value of not more than 70 mgKOH/g;
the vinyl polymer comprises a constitutional unit derived from an ionic monomer and a constitutional unit derived from a hydrophobic monomer, wherein the hydrophobic monomer is at least an aromatic group-containing monomer,
the vinyl polymer is in the form of a crosslinked polymer; and
the pigment and the vinyl polymer are present in the form of pigment-containing polymer particles.

[3] An ink-jet printing method including the following steps 1 and 2:

Step 1: ejecting a carbodiimide compound, a pigment, a vinyl polymer and water onto a surface of a printing medium by an ink-jetting method to print characters or images thereon, said vinyl polymer being a carboxyl group-containing polymer having an acid value of not more than 70 mgKOH/g, the vinyl polymer comprises a constitutional unit derived from an ionic monomer and a constitutional unit derived from a hydrophobic monomer, wherein the hydrophobic monomer is at least an aromatic group-containing monomer, the vinyl polymer is in the form of a crosslinked polymer, and said pigment and vinyl polymer being present in the form of pigment-containing polymer particles; and

Step 2: subjecting the characters or images printed in the step 1 to heat treatment at a temperature of not lower than 50°C and not higher than 200°C.

In accordance with the present invention, it is possible to provide a water-based ink for ink-jet printing which is capable of providing a printed material that is excellent in rub fastness, an ink set for ink-jet printing, and an ink-jet printing method.

[Water-Based Ink for Ink-Jet Printing]

The first embodiment of the present invention concerning the water-based ink for ink-jet printing (hereinafter also referred to merely as a "water-based ink" or an "ink") is a water-based ink for ink-jet printing which contains a carbodiimide compound, a pigment, a vinyl polymer and water, in which the vinyl polymer is a carboxyl group-containing polymer having an acid value of not more than 70 mgKOH/g, the vinyl polymer comprises a constitutional unit derived from an ionic monomer and a constitutional unit derived from a hydrophobic monomer, wherein the hydrophobic monomer is at least an aromatic group-containing monomer, the vinyl polymer is in the form of a crosslinked polymer, and the pigment and the vinyl polymer are present in the form of pigment-containing polymer particles.

In addition, the second embodiment of the present invention is an ink set for ink-jet printing comprising an aqueous composition containing a carbodiimide compound and water, and a water-based ink containing a pigment and a vinyl polymer, in which the vinyl polymer is a carboxyl group-containing polymer having an acid value of not more than 70 mgKOH/g, the vinyl polymer comprises a constitutional unit derived from an ionic monomer and a constitutional unit derived from a hydrophobic monomer, wherein the hydrophobic monomer is at least an aromatic group-containing monomer, the vinyl polymer is in the form of a crosslinked polymer, and the pigment and the vinyl polymer are present in the form of pigment-containing polymer particles.

In the first embodiment of the present invention, by conducting printing on a printing medium using the water-based ink, it is possible to improve rub fastness of the resulting printed material.

In the second embodiment of the present invention, by mixing the aqueous composition and the water-based ink with each other on a surface of a printing medium, it is possible to improve rub fastness of the resulting printed material.

Meanwhile, the term "printing" as used in the present specification means a concept that includes printing or typing operation for printing characters or images, and the term "printed material" as used in the present specification means a concept that includes printed matters or typed materials on which characters or images are printed.

In addition, the term "water-based" as used in the present specification means that water has a largest content among components of a medium contained in the ink.

The water-based ink of the present invention is capable of providing a printed material that is excellent in rub fastness. The reason why the aforementioned advantageous effect can be attained by the present invention is considered as follows though it is not clearly determined yet.

That is, in general, upon conducting the ink-jet printing, after the ink is impacted onto a surface of a non-water absorbing printing medium such as a resin film, the pigment particles contained in the ink tend to remain adhered onto the surface of the printing medium without penetrating into the printing medium. In the present invention, it is considered that the carbodiimide compound contained in the water-based ink or the aqueous composition is subjected to crosslinking reaction with a part of carboxy groups of the vinyl polymer constituting the pigment-containing polymer particles on the surface of the printing medium, so that a coating film of the ink having a firm crosslinked structure is formed on the printing medium. Furthermore, when using the vinyl polymer having a comparatively low acid value such as an acid value of not more than 70 mgKOH/g, it is possible to suppress occurrence of static repulsion between the pigment-containing polymer particles, and water also tends to hardly remain between the polymer particles upon drying of the ink. As a result, it is considered that the polymer particles are more likely to be adhered to each other, resulting in formation of a crosslinked structure even between the polymer particles. Thus, it is considered that the pigment particles are fixed on the printing medium by the thus formed coating film of the ink, so that the resulting printed material can be improved in rub fastness.

<Carbodiimide Compound>

In the water-based ink of the present invention, by using the carbodiimide compound in combination with the carboxy group-containing vinyl polymer, it is possible to form a firm coating film of the water-based ink on the printing medium while maintaining storage stability of the water-based ink, so that the resulting printed material can be improved in rub fastness.

The carbodiimide compound is preferably a polycarbodiimide compound containing two or more carbodiimide groups in a molecule thereof. The polycarbodiimide compound is preferably a polymer containing carbodiimide groups (hereinafter also referred to merely as a "carbodiimide group-containing polymer").

The carbodiimide group equivalent of the carbodiimide group-containing polymer is preferably not less than 200, more preferably not less than 250 and even more preferably not less than 300 from the viewpoint of improving rub fastness of the resulting printed material, and is also preferably not more than 650, more preferably not more than 500, even more preferably not more than 400 and further even more preferably not more than 360 from the viewpoint of improving storage stability of the aqueous composition.

Incidentally, the carbodiimide group equivalent of the carbodiimide group-containing polymer as used herein means a mass of the carbodiimide group-containing polymer per 1 mol of the carbodiimide group.

The polycarbodiimide compound is preferably an aqueous polycarbodiimide compound from the viewpoint of improving reactivity, stability and handling properties thereof, etc. The aqueous polycarbodiimide compound may be either water-soluble or water-dispersible. Examples of the aqueous polycarbodiimide compound include compounds containing a hydrophilic group at a terminal end thereof.

Such an aqueous polycarbodiimide compound may be produced by subjecting an organic diisocyanate compound to condensation reaction in association with decarboxylation (removal of carbon dioxide) to form an isocyanate-terminated polycarbodiimide, and then further adding a known hydrophilic segment containing a functional group having a reactivity with the isocyanate group to the isocyanate-terminated polycarbodiimide.

Examples of commercially available products of the carbodiimide group-containing polymer include "CARBODILITE E-02", "CARBODILITE E-03A", "CARBODILITE E-05", "CARBODILITE V-02", "CARBODILITE V-02-L2" and "CARBODILITE V-04" (tradenames) all available from Nisshinbo Chemical Inc., and the like

<Pigment>

The pigment used in the present invention may be either an inorganic pigment or an organic pigment, and may also be used in the form of a lake pigment or a fluorescent pigment. In addition, the inorganic or organic pigment may also be used in combination with an extender pigment, if required.

Specific examples of the inorganic pigment include carbon blacks, metal oxides such as titanium oxide, iron oxide, red iron oxide, chromium oxide, etc., iridescent nacreous pigments, and the like. In particular, the carbon blacks are preferably used for black inks. Examples of the carbon blacks include furnace blacks, thermal lamp blacks, acetylene blacks, channel blacks and the like.

Specific examples of the organic pigment include azo pigments such as azo lake pigments, insoluble monoazo pigments, insoluble disazo pigments, chelate azo pigments, etc.; polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, threne pigments, etc.; and the like.

The hue of the pigment is not particularly limited, and there may be used any of achromatic color pigments having a white color, a black color, a gray color, etc.; and chromatic color pigments having a yellow color, a magenta color, a cyan color, a blue color, a red color, an orange color, a green color, etc.

Specific examples of the preferred organic pigments include at least one pigment selected from C.I. Pigment Yellow 13, 17, 74, 83, 93, 97, 109, 110, 120, 128, 138, 139, 151, 154, 155, 174 and 180; C.I. Pigment Red 48, 57:1, 122, 146, 150, 176, 184, 185, 188, 202 and 254; C.I. Pigment Orange; C.I. Pigment Violet 19 and 23; C.I. Pigment Blue 15, 15:1, 15:2, 15:3, 15:4, 16 and 60; C.I. Pigment Green 7 and 36; and the like.

Examples of the extender pigment include silica, calcium carbonate, talc and the like.

The aforementioned pigments may be used alone or in the form of a mixture of any two or more thereof.

In the present invention, from the viewpoint of enhancing optical density of the printed characters or images, the pigment and the vinyl polymer are present in the form of polymer particles containing the pigment (hereinafter also referred to merely as "pigment-containing polymer particles") in the water-based ink. The expression "pigment-containing" of the polymer particles as used herein is intended to include the configuration in which the pigment is enclosed in the polymer particles, the configuration in which a part of the pigment is enclosed in the polymer particles, and the other part of the pigment is exposed onto a surface of the respective polymer particles, the configuration in which the polymer particles are adhered onto a surface of the pigment, and the like, as well as mixtures of these configurations. Among these configurations of the pigment-containing polymer particles, preferred is the configuration in which the pigment is enclosed in the polymer particles.

Incidentally, the "pigment-containing polymer particles" as used herein also includes a concept of the below-mentioned "crosslinked polymer particles containing the pigment" (pigment-containing crosslinked polymer particles).

<Vinyl Polymer>

The water-based ink of the present invention contains the carboxy group-containing vinyl polymer having an acid value of not more than 70 mgKOH/g as a resin containing a reactive group that is capable of undergoing crosslinking reaction with the carbodiimide compound. From the viewpoint of improving rub fastness of the resulting printed material, the vinyl polymer is preferably a water-insoluble polymer.

The "water-insoluble polymer" as used herein means a polymer exhibiting a solubility in water of 10 g or less, preferably 5 g or less and more preferably 1 g or less when the polymer is dried to a constant weight at 105°C for 2 hours and then dissolved in 100 g of water at 25°C. The aforementioned solubility means a solubility in water of the polymer whose carboxy groups are neutralized completely, i.e., 100%, with sodium hydroxide.

The aforementioned vinyl polymer is preferably a vinyl polymer that is produced by copolymerizing a monomer mixture containing an ionic monomer (a) (hereinafter also referred to merely as a "component (a)") and a hydrophobic monomer (b) (hereinafter also referred to merely as a "component (b)"), and preferably a monomer mixture further containing a hydrophilic nonionic monomer (c) (hereinafter also referred to merely as a "component (c)") in addition to the components (a) and (b) (such a mixture is hereinafter also referred to merely as a "monomer mixture").

The vinyl polymer contains a constitutional unit derived from the component (a) and a constitutional unit derived from the component (b). The vinyl polymer preferably further contains a constitutional unit derived from the hydrophilic nonionic monomer (c) in addition to the constitutional unit derived from the component (a) and the constitutional unit derived from the component (b).

(Ionic Monomer (a))

The ionic monomer (a) is used as a monomer component of the vinyl polymer from the viewpoint of stably dispersing the pigment-containing polymer particles in the water-based ink. Examples of the ionic monomer (a) include an anionic monomer and a cationic monomer. Among these ionic monomers, preferred is the anionic monomer.

As the anionic monomer, in view of the carboxy groups contained in the vinyl polymer, there may be used a carboxylic acid monomer. The carboxylic acid monomer may also be used in combination with a sulfonic acid monomer, a phosphoric acid monomer and the like.

Specific examples of the carboxylic acid monomer include acrylic acid, methacrylic acid, crotonic acid, itaconic acid, maleic acid, fumaric acid, citraconic acid, 2-methacryloyloxymethylsuccinic acid and the like.

Specific examples of the sulfonic acid monomer include styrenesulfonic acid, 2-acrylamido-2-methylpropanesulfonic acid, 3-sulfopropyl (meth)acrylate and the like.

Meanwhile, the "(meth)acrylate" as used herein means an acrylate and/or a methacrylate, and is also hereinlater defined in the same way.

Specific examples of the phosphoric acid monomer include vinylphosphonic acid, vinyl phosphate, bis(methacryloxyethyl) phosphate, diphenyl-2-acryloyloxyethyl phosphate, diphenyl-2-methacryloyloxyethyl phosphate and the like.

Among the aforementioned anionic monomers, from the viewpoint of improving dispersion stability of the anionic polymer particles in the water-based ink, preferred is the carboxylic acid monomer, more preferred are acrylic acid and methacrylic acid, and even more preferred is methacrylic acid.

(Hydrophobic Monomer (b))

The hydrophobic monomer (b) is used as a monomer component of the vinyl polymer from the viewpoint of improving dispersion stability of the pigment-containing polymer particles. The hydrophobic monomer is at least an aromatic group-containing monomer. Examples of the hydrophobic monomer (b) also include at least one monomer selected from an alkyl (meth)acrylate and a macromonomer, and the like. The hydrophobic monomer (b) preferably contains the macromonomer.

The preferred alkyl (meth)acrylate include those alkyl (meth)acrylates containing an alkyl group having 1 to 22 carbon atoms and preferably 6 to 18 carbon atoms. Examples of the alkyl (meth)acrylates include methyl (meth)acrylate, ethyl (meth)acrylate, (iso)propyl (meth)acrylate, (iso- or tertiary-)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate, (iso)stearyl (meth)acrylate and the like.

Meanwhile, the terms "(iso- or tertiary-)" and "(iso)" as used herein mean both of the structure in which any of the groups expressed by "iso or tertiary" and "iso" respectively is present, and the structure in which any of these groups is not present (i.e., normal).

The aromatic group-containing monomer is preferably a vinyl monomer containing an aromatic group having 6 to 22 carbon atoms which may contain a substituent group containing a hetero atom, and more preferably a styrene-based monomer or an aromatic group-containing (meth)acrylate. It is also preferred that these aromatic group-containing monomers are used in combination with each other.

Specific examples of the preferred styrene-based monomer include styrene, 2-methyl styrene and vinyl benzene. Among these styrene-based monomers, more preferred is styrene.

Specific examples of the preferred aromatic group-containing (meth)acrylate include benzyl (meth)acrylate, phenoxyethyl (meth)acrylate, and the like. Among these aromatic group-containing (meth)acrylates, more preferred is benzyl (meth)acrylate.

The macromonomer is in the form of a compound containing a polymerizable functional group at one terminal end thereof and having a number-average molecular weight of from 500 to 100,000 and preferably from 1,000 to 10,000, and is used as a monomer component of the vinyl polymer from the viewpoint of improving dispersion stability of the pigment-containing polymer particles. The polymerizable functional group bonded to one terminal end of the macromonomer is preferably an acryloyloxy group or a methacryloyloxy group, and more preferably a methacryloyloxy group.

Meanwhile, the number-average molecular weight of the macromonomer may be measured by gel chromatography using chloroform containing 1 mmol/L of dodecyl dimethylamine as a solvent and using polystyrene as a reference standard substance.

As the macromonomer, from the viewpoint of improving dispersion stability of the pigment-containing polymer particles, there are preferably used an aromatic group-containing monomer-based macromonomer and a silicone-based macromonomer. Among these macromonomers, more preferred is the aromatic group-containing monomer-based macromonomer.

Examples of an aromatic group-containing monomer constituting the aromatic group-containing monomer-based macromonomer include the same aromatic group -containing monomers as described above. Among these aromatic group-containing monomers, preferred are styrene and benzyl (meth)acrylate, and more preferred is styrene.

Specific examples of commercially available products of the styrene-based macromonomer include "AS-6(S)", "AN-6(S)" and "HS-6(S)" (tradenames) all available from Toagosei Co., Ltd., and the like.

Examples of the silicone macromonomer include organopolysiloxanes containing a polymerizable functional group at one terminal end thereof, and the like.

(Hydrophilic Nonionic Monomer (c))

From the viewpoint of improving dispersion stability of the pigment-containing polymer particles, the vinyl polymer preferably further contains the hydrophilic nonionic monomer (c) as the monomer component thereof.

Examples of the hydrophilic nonionic monomer (c) include 2-hydroxyethyl (meth)acrylate, 3-hydroxypropyl (meth)acrylate, polyalkylene glycol (meth)acrylates such as polypropylene glycol (n = 2 to 30 wherein n represents an average molar number of addition of oxyalkylene groups: hereinafter defined in the same way) (meth)acrylate, etc., alkoxy polyalkylene glycol (meth)acrylates such as methoxy polyethylene glycol (n = 1 to 30) (meth)acrylate, etc., phenoxy (ethylene glycol/propylene glycol copolymer) (n = 1 to 30 in which n for ethylene glycol: 1 to 29) (meth)acrylate, and the like. Among these hydrophilic nonionic monomers (c), preferred are polypropylene glycol (meth)acrylate, methoxy polyethylene glycol (meth)acrylate and phenoxy (ethylene glycol/propylene glycol copolymer) (meth)acrylate, and also preferred is a combination of these (meth)acrylates.

Specific examples of commercially available products of the component (c) include "NK ESTER TM-20G", "NK ESTER TM-40G", "NK ESTER TM-90G" and "NK ESTER TM-230G" all available from Shin-Nakamura Chemical Co., Ltd.; and "BLEMMER PE-90", "BLEMMER PE-200", "BLEMMER PE-350", "BLEMMER PME-100", "BLEMMER PME-200", "BLEMMER PME-400" and the like, "BLEMMER PP-500", "BLEMMER PP-800" and the like, "BLEMMER AP-150", "BLEMMER AP-400", "BLEMMER AP-550" and the like, "BLEMMER 50PEP-300", "BLEMMER 50POEP-800B" and "BLEMMER 43PAPE-600B" (which all contain a hydroxy group) all available from NOF Corporation, and the like.

These components (a) to (c) may be respectively used alone or in combination of any two or more thereof.

Upon production of the vinyl polymer, the contents of the aforementioned components (a) to (c) in the monomer mixture (contents of non-neutralized components; hereinafter defined in the same way) or the contents of the constitutional units derived from the components (a) to (c) in the vinyl polymer are as follows, from the viewpoint of improving dispersion stability of the pigment-containing polymer particles in the water-based ink.

The content of the component (a) is preferably not less than 2% by mass, more preferably not less than 4% by mass and even more preferably not less than 5% by mass, and is also preferably not more than 40% by mass, more preferably not more than 30% by mass and even more preferably not more than 25% by mass.

The content of the component (b) is preferably not less than 30% by mass, more preferably not less than 40% by mass and even more preferably not less than 50% by mass, and is also preferably not more than 98% by mass, more preferably not more than 90% by mass and even more preferably not more than 80% by mass.

The content of the component (c) is not less than 0% by mass. In the case where the component (c) is further used in addition to the components (a) and (b), the content of the component (c) is preferably not less than 2% by mass, more preferably not less than 4% by mass and even more preferably not less than 6% by mass, and is also preferably not more than 40% by mass, more preferably not more than 30% by mass and even more preferably not more than 25% by mass.

Also, in the case where the macromonomer is used as the component (b), the content of the macromonomer is preferably not less than 5% by mass, more preferably not less than 8% by mass and even more preferably not less than 10% by mass, and is also preferably not more than 50% by mass, more preferably not more than 40% by mass and even more preferably not more than 30% by mass.

In addition, the mass ratio of the component (a) to the component (b) [component (a)/component (b)] in the monomer mixture, i.e., the mass ratio of the constitutional unit derived from the ionic monomer (a) (in the case where two or more constitutional units derived from the ionic monomers (a) are present, it means a sum of these constitutional units) to the constitutional unit derived from the hydrophobic monomer (b) (in the case where two or more constitutional units derived from the hydrophobic monomers (b) are present, it means a sum of these constitutional units) [(a)/(b)] is preferably not less than 0.01, more preferably not less than 0.02 and even more preferably not less than 0.03, and is also preferably not more than 1.0, more preferably not more than 0.7 and even more preferably not more than 0.5.

<Production of Vinyl Polymer>

The vinyl polymer may be produced by copolymerizing the aforementioned monomer mixture by known polymerization methods. As the polymerization method, preferred is a solution polymerization method.

The solvent used in the solution polymerization method is not particularly limited, and as the solvent, there may be mentioned at least one polar organic solvent selected from aliphatic alcohols having not less than 1 and not more than 8 carbon atoms, ketones, ethers, esters and the like. Specific examples of the preferred solvent include aliphatic alcohols having 1 to 3 carbon atoms and ketones having 3 to 6 carbon atoms, such as methanol, ethanol, acetone, methyl ethyl ketone, methyl isobutyl ketone, etc. Of these solvents, more preferred is methyl ethyl ketone.

The polymerization may be carried out in the presence of a polymerization initiator or a polymerization chain transfer agent. As the polymerization initiator, preferred are azo compounds, and more preferred is 2,2'-azobis(2,4-dimethylvaleronitrile). As the polymerization chain transfer agent, preferred are mercaptans, and more preferred are 2-mercaptoethanol and 2-mercaptopropionic acid.

The preferred polymerization conditions may vary depending upon the kinds of polymerization initiators used, etc. The polymerization temperature is preferably not lower than 50°C and more preferably not lower than 55°C, and is also preferably not higher than 90°C and more preferably not higher than 85°C. The polymerization time is preferably not less than 1 hour and more preferably not less than 1.5 hours, and is also preferably not more than 20 hours and more preferably not more than 10 hours. In addition, the atmosphere used in the polymerization is preferably a nitrogen gas atmosphere or an atmosphere of an inert gas such as argon, etc.

The vinyl polymer is preferably directly used as such in the form of a polymer solution without removing the solvent used in the polymerization reaction therefrom from the viewpoint of enhancing productivity of the water dispersion of the pigment-containing polymer particles.

The solid content of the thus obtained solution of the vinyl polymer is preferably not less than 30% by mass and more preferably not less than 35% by mass, and is also preferably not more than 60% by mass and more preferably not more than 50% by mass, from the viewpoint of enhancing productivity of the water dispersion of the pigment-containing polymer particles.

After completion of the polymerization reaction, the polymer thus produced may be isolated from the reaction solution by a known method such as reprecipitation, removal of the solvent by distillation, etc. The thus obtained polymer may also be subjected to reprecipitation, membrane separation, chromatography, extraction, etc., for removing unreacted monomers, etc., therefrom.

The acid value of the vinyl-polymer used in the present invention is preferably not more than 70 mgKOH/g, more preferably not more than 68 mgKOH/g and even more preferably not more than 65 mgKOH/g from the viewpoint of improving rub fastness of the resulting printed material, and is also prefearbly not less than 20 mgKOH/g, more prefearbly not less than 30 mgKOH/g and even more prefearbly not less than 35 mgKOH/g from the viewpoint of efficiently dispersing the pigment.

The weight-average molecular weight of the vinyl polymer used in the present invention is preferably not less than 5,000, more preferably not less than 10,000, even more preferably not less than 20,000, further even more preferably not less than 30,000 and still further even more preferably not less than 40,000, and is also preferably not more than 500,000, more preferably not more than 400,000, even more preferably not more than 300,000 and further even more preferably not more than 200,000, from the viewpoint of improving rub fastness of the resulting printed material.

Meanwhile, the acid value and the weight-average molecular weight may be measured by the respective methods described in Examples below.

<Production of Pigment-Containing Polymer Particles>

The polymer particles containing the pigment (pigment-containing polymer particles) can be efficiently produced in the form of a water dispersion thereof by the process including the following steps (1) and (2), and further including the step (3), if required.

Step (1): subjecting a mixture containing the vinyl polymer, the organic solvent, the pigment and water to dispersion treatment to obtain a dispersion of the pigment-containing polymer particles;
Step (2): removing the organic solvent from the dispersion obtained in the step (1) to obtain a water dispersion of the pigment-containing polymer particles; and
Step (3): mixing the water dispersion of the pigment-containing polymer particles obtained in the step (2) and a crosslinking agent to subject the water dispersion to crosslinking treatment, thereby obtaining a water dispersion of the crosslinked polymer particles containing the pigment (hereinafter also referred to merely as "pigment-containing crosslinked polymer particles").

(Step (1))

The step (1) is the step of subjecting a mixture containing the vinyl polymer, the organic solvent, the pigment and water to dispersion treatment to obtain the dispersion of the pigment-containing polymer particles.

In the step (1), there is preferably used the method in which the vinyl polymer is first dissolved in the organic solvent, and then the pigment and water, if required, together with a neutralizing agent, a surfactant and the like, are added to and mixed in the resulting organic solvent solution to obtain the dispersion of an oil-in-water type. The order of addition of the respective components to be added to the organic solvent solution of the vinyl polymer is not particularly limited, and it is however preferred that water, the neutralizing agent and the pigment are successively added in this order.

The organic solvent used for dissolving the vinyl polymer is not particularly limited. Examples of the organic solvent include aliphatic alcohols having 2 to 6 carbon atoms, ketones having 3 to 8 carbon atoms, ethers such as dibutyl ether, tetrahydrofuran, dioxane, etc., esters, and the like. Among these organic solvents, preferred are those organic solvents having 3 to 6 carbon atoms, and more preferred are ketones such as acetone, methyl ethyl ketone, methyl isobutyl ketone, etc.

When the vinyl polymer has been synthesized by the solution polymerization method, the organic solvent used in the polymerization may be directly used as such in the step (1).

(Neutralization)

The carboxy groups of the vinyl polymer are preferably at least partially neutralized using a neutralizing agent. The pH value of the resulting dispersion is preferably not less than 5.5 and more preferably not less than 6 from the viewpoint of improving handling properties of the dispersion, such as suppression of skin irritation, etc., and is also preferably not more than 13, more preferably not more than 12 and even more preferably not more than 11 from the viewpoint of suppressing corrosion of members used upon the printing.

Examples of the neutralizing agent include bases such as lithium hydroxide, sodium hydroxide, potassium hydroxide, various amines and the like. In addition, the vinyl polymer may be previously neutralized. The neutralization degree of the carboxy groups of the vinyl polymer is preferably not less than 10 mol%, more preferably not less than 20 mol% and even more preferably not less than 30 mol%, and is also preferably not more than 300 mol%, more preferably not more than 200 mol% and even more preferably not more than 150 mol%, from the viewpoint of improving dispersion stability of the resulting dispersion.

The neutralization degree as used herein can be determined as an equivalent of the neutralizing agent used on the basis of the carboxy groups of the vinyl polymer according to the following formula. When the equivalent of the neutralizing agent used is not more than 100 mol%, the equivalent of the neutralizing agent used has the same meaning as the neutralization degree of the carboxy groups of the vinyl polymer. On the other hand, when the equivalent of the neutralizing agent used exceeds 100 mol%, it means that the neutralizing agent is used in an excessively large amount relative to the carboxy groups of the vinyl polymer, and in such a case, the neutralization degree of the carboxy groups of the vinyl polymer is regarded as being 100 mol%.

Equivalent (mol%) of neutralizing agent used = [{mass (g) of neutralizing agent added/equivalent of neutralizing agent}/[{weighted mean acid value of vinyl polymer (mgKOH/g) x mass (g) of vinyl polymer}/(56 x 1,000)]] x 100.

The content of the pigment in the aforementioned mixture is preferably not less than 5% by mass and more preferably not less than 10% by mass, and is also preferably not more than 50% by mass and more preferably not more than 40% by mass.

The content of the vinyl polymer in the mixture is preferably not less than 2% by mass and more preferably not less than 3% by mass, and is also preferably not more than 40% by mass and more preferably not more than 20% by mass.

Also, the content of the organic solvent in the mixture is preferably not less than 10% by mass, and is also preferably not more than 70% by mass and more preferably not more than 50% by mass. The content of water in the mixture is preferably not less than 10% by mass and more preferably not less than 20% by mass, and is also preferably not more than 70% by mass.

The mass ratio of the content of the pigment to the content of the vinyl polymer [pigment/vinyl polymer] is preferably from 50/50 to 90/10 and more preferably from 60/40 to 80/20 from the viewpoint of improving dispersion stability of the resulting dispersion.

In the step (1), the method of dispersing the mixture is not particularly limited. The pigment-containing polymer particles may be atomized into fine particles having a desired average particle size only by substantial dispersion treatment. However, it is preferred that the mixture is first subjected to preliminary dispersion treatment, and then to the substantial dispersion treatment by applying a shear stress thereto so as to control the average particle size of the obtained pigment-containing polymer particles to a desired value.

The temperature used in the dispersion treatment in the step (1) is preferably not lower than 0°C, more preferably not lower than 5°C and even more preferably not lower than 5°C, and is also preferably not higher than 40°C and more preferably not higher than 30°C. The dispersing time is preferably not less than 1 hour and more preferably not less than 2 hours, and is also preferably not more than 30 hours and more preferably not more than 20 hours.

As the apparatus used upon subjecting the mixture to the preliminary dispersion treatment, there may be mentioned conventionally known mixing or stirring devices such as anchor blades, disper blades, etc. Of these devices, preferred are high-speed stirring mixers.

As the apparatus used for applying a shear stress to the mixture in the substantial dispersion treatment, there may be mentioned kneading machines such as roll mills, kneaders, etc., high-pressure homogenizers such as "Micro Fluidizer" (tradename) available from Microfluidics Corporation, etc., and media-type dispersers such as paint shakers, beads mills, etc. These apparatuses may be used in combination with each other. Among these devices, the high-pressure homogenizers are preferably used from the viewpoint of reducing the particle size of the pigment-containing polymer particles.

The more preferred method of dispersing the mixture is such a method in which the mixture is subjected to the preliminary dispersion treatment using a disper and the like, followed by subjecting the resulting dispersion to the high-pressure dispersion treatment. The term "high-pressure dispersion" as used herein means that the dispersion treatment is conducted under a pressure of not less than 20 MPa.

The pressure used in the aforementioned dispersion treatment is preferably not less than 50 MPa, more preferably not less than 100 MPa and even more preferably not less than 120 MPa, and is also preferably not more than 250 MPa and more preferably not more than 200 MPa, from the viewpoint of reducing the particle size of the pigment-containing polymer particles and enhancing dispersion treatment efficiency.

(Step (2))

The step (2) is the step of removing the organic solvent from the dispersion obtained in the step (1) to obtain a water dispersion of the pigment-containing polymer particles.

The removal of the organic solvent may be conducted by conventionally known methods. The organic solvent is preferably substantially completely removed from the thus obtained water dispersion containing the pigment-containing polymer particles. However, the residual organic solvent may be present in the water dispersion unless the objects and advantageous effects of the present invention are adversely affected by the residual organic solvent. The content of the residual organic solvent in the water dispersion is preferably not more than 0.1% by mass and more preferably not more than 0.01% by mass.

If required, the dispersion may also be subjected to heating and stirring treatments before removing the organic solvent therefrom by distillation.

The temperature of the dispersion upon removing the organic solvent therefrom may be appropriately selected depending upon the kind of organic solvent to be removed. The temperature of the dispersion upon removing the organic solvent therefrom under reduced pressure is preferably not lower than 20°C and more preferably not lower than 30°C, and is also preferably not higher than 80°C and more preferably not higher than 70°C.

The removal of the organic solvent from the dispersion is preferably conducted such that the concentration of non-volatile components (solid components) in the dispersion obtained after removing the organic solvent therefrom is preferably not less than 15% by mass and more preferably not less than 20% by mass, and is also preferably not more than 50% by mass, more preferably not more than 40% by mass and even more preferably not more than 35% by mass.

The solid content of the water dispersion may be measured by the method described in Examples below.

In the thus obtained water dispersion of the pigment-containing polymer particles, the solid components as the pigment-containing polymer particles having the aforementioned particle configuration are dispersed in a dispersing medium containing water as a main medium.

The average particle size of the pigment-containing polymer particles is preferably not less than 40 nm, more preferably not less than 50 nm and even more preferably not less than 60 nm, and is also preferably not more than 400 nm, more preferably not more than 250 nm, even more preferably not more than 200 nm and further even more preferably not more than 170 nm, from the viewpoint of improving rub fastness of the resulting printed material.

The average particle size of the pigment-containing polymer particles may be measured by the method described in Examples below.

(Step (3))

The step (3) is the step of mixing the water dispersion containing the pigment-containing polymer particles which has been obtained in the step (2) and a crosslinking agent with each other to subject the water dispersion to crosslinking treatment, thereby obtaining a water dispersion containing the pigment-containing crosslinked polymer particles. The step (3) is an optional step.

By conducting the step (3), the vinyl polymer constituting the pigment-containing polymer particles is transformed into a crosslinked polymer.

In addition, when compounding the resulting water dispersion in the ink, the vinyl polymer is prevented from suffering from swelling with the organic solvent, so that it is possible to improve rub fastness of the resulting printed material.

As the method of subjecting the water dispersion to the crosslinking treatment, there may be mentioned the method in which the mixture of the aforementioned water dispersion and the crosslinking agent is reacted while stirring at a temperature of not lower than 60°C and preferably not lower than 65°C.

The crosslinking gent is preferably a water-insoluble polyfunctional epoxy compound containing two or more epoxy groups in a molecule thereof. The vinyl polymer constituting the pigment-containing polymer particles undergoes such a crosslinking reaction that the carboxy groups contained in the vinyl polymer are partially crosslinked with the water-insoluble polyfunctional epoxy compound.

The crosslinking gent is more preferably a compound containing two or more glycidyl ether groups in a molecule thereof, and even more preferably a polyglycidyl ether compound of a polyhydric alcohol containing not less than 3 and not more than 8 hydrocarbon groups in a molecule thereof.

The "water-insoluble" of the crosslinking agent as used herein means that when the crosslinking agent is dissolved in 100 g of ion-exchanged water at 25°C until reaching a saturation concentration thereof, the solubility in water of the crosslinking agent is less than 50 g. The solubility in water of the crosslinking agent is preferably not more than 40 g and more preferably not more than 35 g.

From the viewpoint of efficiently conducting the crosslinking reaction of the polymer in a water-based medium, the water solubility rate of the crosslinking agent is preferably less than 50% by mass, more preferably not more than 40% by mass and even more preferably not more than 35% by mass. The "water solubility rate" of the crosslinking agent as used herein means a rate (% by mass) of dissolution of the crosslinking agent as measured by dissolving 10 parts by mass of the crosslinking agent in 90 parts by mass of water at room temperature (25°C).

The molecular weight of the crosslinking agent is preferably not less than 120, more preferably not less than 150 and even more preferably not less than 200, and is also preferably not more than 2000, more preferably not more than 1500 and even more preferably not more than 1000, from the viewpoint of facilitating the crosslinking reaction.

The epoxy equivalent (g/eq) of the crosslinking agent is preferably not less than 90, more preferably not less than 100 and even more preferably not less than 110, and is also preferably not more than 300, more preferably not more than 200 and even more preferably not more than 150.

Meanwhile, the water solubility rate and the epoxy equivalent of the epoxy compound may be measured by the respective methods described in Examples below.

Specific examples of the crosslinking agent include polyglycidyl ethers such as polypropylene glycol diglycidyl ether, glycerol polyglycidyl ether, polyglycerol polyglycidyl ether, trimethylolpropane polyglycidyl ether, sorbitol polyglycidyl ether, pentaerythritol polyglycidyl ether, resorcinol diglycidyl ether, neopentyl glycol diglycidyl ether, 1,6-hexanediol diglycidyl ether, hydrogenated bisphenol A-type diglycidyl ethers, and the like. Of these crosslinking agents, preferred is at least one compound selected from polypropylene glycol diglycidyl ether (water solubility rate: 31% by mass), trimethylolpropane polyglycidyl ether (water solubility rate: 27% by mass) and pentaerythritol polyglycidyl ether (water solubility rate: 0% by mass).

Examples of commercially available products of the water-insoluble polyfunctional epoxy compound include "DENACOL EX" series products available from Nagase ChemteX Corporation, "EPIOL BE" series products and "EPIOL B" series products both available from NOF Corporation, and the like.

From the viewpoint of improving rub fastness of the resulting printed material, the amount of the crosslinking agent, in particular, the water-insoluble polyfunctional epoxy compound, used in the crosslinking reaction, may be controlled to such an amount as to react with preferably not less than 0.1 mmol, more preferably not less than 0.3 mmol and even more preferably not less than 0.5 mmol of an ionic group of the vinyl polymer as calculated in terms of an amount of the ionic group per 1 g of the vinyl polymer, and may also be controlled to such an amount as to react with preferably not more than 20 mmol, more preferably not more than 15 mmol, even more preferably not more than 10 mmol, further even more preferably not more than 5 mmol and still further even more preferably not more than 1.0 mmol of the ionic group of the vinyl polymer as calculated in terms of an amount of the ionic group per 1 g of the vinyl polymer.

The pigment-containing crosslinked polymer particles obtained by the aforementioned crosslinking treatment preferably contain the ionic group neutralized with the base in an amount of not less than 0.3 mmol and more preferably not less than 0.5 mmol per 1 g of the polymer, and also preferably not more than 1.5 mmol per 1 g of the polymer.

The crosslinking rate of the pigment-containing polymer particles A is preferably not less than 10 mol%, more preferably not less than 20 mol% and even more preferably not less than 30 mol%, and is also preferably not more than 80 mol%, more preferably not more than 60 mol% and even more preferably not more than 50 mol%.

The aforementioned crosslinking rate is the value obtained by dividing the number of moles of the reactive group of the crosslinking agent by the number of moles of a reactive group (carboxy group) contained in the pigment-containing polymer particles which can be reacted with the crosslinking agent.

<Water-Soluble Organic Solvent>

The water-based ink of the present invention preferably further contains a water-soluble organic solvent from the viewpoint of improving storage stability and ink-jet ejection properties of the resulting water-based ink as well as from the viewpoint of improving rub fastness of the resulting printed material by forming a smooth coating film of the ink thereon.

The "water-soluble organic solvent" as used herein means such an organic solvent whose solubility in water as measured by dissolving the organic solvent in 100 mL of water at 25°C is not less than 10 mL.

The boiling point of the water-soluble organic solvent is preferably not lower than 150°C, more preferably not lower than 160°C, even more preferably not lower than 170°C and further even more preferably not lower than 180°C, and is also preferably not higher than 250°C, more preferably not higher than 240°C and even more preferably not higher than 230°C.

In the case where two or more water-soluble organic solvents are used in combination with each other as the water-soluble organic solvent, the boiling point of the water-soluble organic solvent means a weighted mean value of boiling points of the respective water-soluble organic solvents which are weighted by contents (% by mass) of the organic solvents.

Examples of the water-soluble organic solvent include a polyhydric alcohol, a polyhydric alcohol alkyl ether, a nitrogen-containing heterocyclic compound, an amide, an amine, a sulfur-containing compound and the like. Of these organic solvents, from the viewpoint of improving ejection properties and storage stability of the resulting water-based ink as well as rub fastness of the resulting printed material, preferred is a polyhydric alcohol. The polyhydric alcohol may be used in the form of a mixed alcohol containing a plurality of compounds belonging to the concept of the polyhydric alcohol. A part of the polyhydric alcohol used herein may also be replaced with the polyhydric alcohol alkyl ether. In addition, when using the polyhydric alcohol alkyl ether as the water-soluble organic solvent, the polyhydric alcohol alkyl ether may also be used in the form of a mixed polyhydric alcohol alkyl ether containing a plurality of compounds belonging to the concept of the polyhydric alcohol alkyl ether, similarly to the aforementioned polyhydric alcohol.

Examples of the polyhydric alcohol include ethylene glycol (boiling point (b.p.) 197°C), propylene glycol (b.p. 188°C), dipropylene glycol (b.p. 232°C), polypropylene glycol, 1,3-propanediol (b.p. 210°C), 2-methyl-1,3-propanediol (b.p. 214°C), 1,2-butanediol (b.p. 192°C), 1,3-butanediol (b.p. 208°C), 1,4-butanediol (b.p. 230°C), 3-methyl-1,3-butanediol (b.p. 203°C), 1,5-pentanediol (b.p. 242°C), 2-methyl-2,4-pentanediol (b.p. 196°C), 1,2,6-hexanetriol (b.p. 178°C), 1,2,4-butanetriol (b.p. 190°C), 1,2,3-butanetriol (b.p. 175°C), petriol (b.p. 216°C) and the like. In addition, diethylene glycol (b.p. 244°C), polyethylene glycol, 1,6-hexanediol (b.p. 250°C), triethylene glycol (b.p. 285°C), tripropylene glycol (b.p. 273°C), glycerin (b.p. 290°C) and the like may also be used in the present invention. These compounds having a boiling point higher than 240°C are preferably used in combination with the aforementioned compounds having a boiling point lower than 240°C.

Examples of the polyhydric alcohol alkyl ether include alkylene glycol monoalkyl ethers, dialkylene glycol monoalkyl ethers, trialkylene glycol monoalkyl ethers and the like. Specific examples of the polyhydric alcohol alkyl ether include ethylene glycol monoethyl ether (b.p. 135°C), ethylene glycol monobutyl ether (b.p. 171°C), diethylene glycol monomethyl ether (b.p. 194°C), diethylene glycol monoethyl ether (b.p. 202°C), diethylene glycol monobutyl ether (b.p. 230°C), triethylene glycol monomethyl ether (b.p. 122°C), triethylene glycol monoisobutyl ether (b.p. 160°C), tetraethylene glycol monomethyl ether (b.p. 158°C), propylene glycol monoethyl ether (b.p. 133°C), dipropylene glycol monomethyl ether (b.p. 190°C), dipropylene glycol monobutyl ether (b.p. 227°C), tripropylene glycol monomethyl ether (b.p. 243°C), tripropylene glycol monobutyl ether and the like.

From the viewpoint of improving rub fastness of the resulting printed material, it is preferred that the water-soluble organic solvent contains the polyhydric alcohol. Among the polyhydric alcohols contained in the water-soluble organic solvent, more preferred are diols having not less than 3 and not more than 6 carbon atoms, even more preferred are diols having 3 or 4 carbon atoms, and further even more preferred is propylene glycol.

The content of the polyhydric alcohol in the water-soluble organic solvent is preferably not less than 60% by mass, more preferably not less than 80% by mass and even more preferably not less than 90% by mass.

<Other Components>

The water-based ink of the present invention may also contain a pigment-free vinyl polymer, pigment-free polyester resin particles, pigment-free polyurethane resin particles and the like, as a fixing aid polymer for fixing the pigment on a printing medium.

The water-based ink of the present invention may further contain the other resin containing a reactive group that is capable of undergoing a crosslinking reaction with the carbodiimide compound (hereinafter also referred to merely as a "resin C"). By incorporating the resin C in the water-based ink, the coating film of the ink can be further enhanced in density of the crosslinked structure by forming the structure via the resin C, so that it is possible to obtain a much firmer coating film of the ink. The aforementioned reactive group may be such a reactive group that is capable of undergoing a crosslinking reaction with at least one group selected from an isocyanate group, a carbodiimide group and an oxazoline group. Specific examples of the reactive group include a carboxy group, a hydroxy group, an amino group, a thiol group and the like. Among these reactive groups, preferred is at least one reactive group selected from a carboxy group and a hydroxy group.

Examples of the resin C include a carboxy group-containing polyurethane resin, a carboxy group-containing polyester resin and the like. Meanwhile, in the case where the resin C is a copolymer, the resin C may be in the form of any of a random copolymer, a block copolymer, an alternating copolymer and a graft copolymer..

In addition, the water-based ink of the present invention may also contain various additives that may be usually used in a coating solution to be ejected by an ink-jetting method, etc., such as a surfactant, a viscosity modifier, a defoaming agent, an antiseptic agent, a mildew-proof agent, a rust preventive, and the like.

(Contents of Respective Components in Water-Based Ink, etc.)

The contents of the respective components in the water-based ink are as follows from the viewpoint of improving storage stability of the water-based ink as well as rub fastness of the resulting printed material.

The content of the carbodiimide compound in the water-based ink is preferably not less than 0.1% by mass, more preferably not less than 0.3% by mass and even more preferably not less than 0.5% by mass, and is also preferably not more than 10% by mass, more preferably not more than 5% by mass and even more preferably not more than 3% by mass.

The content of the vinyl polymer in the water-based ink is preferably not less than 0.5% by mass, more preferably not less than 1% by mass and even more preferably not less than 2% by mass, and is also preferably not more than 15% by mass, more preferably not more than 12% by mass and even more preferably not more than 10% by mass.

The mass ratio of the carbodiimide compound to the vinyl polymer (carbodiimide compound/vinyl polymer) is preferably not less than 0.01, more preferably not less than 0.1 and even more preferably not less than 0.3, and is also preferably not more than 1.0, more preferably not more than 0.7 and even more preferably not more than 0.5.

The content of the pigment in the ink is preferably not less than 1% by mass, more preferably not less than 2% by mass and even more preferably not less than 3% by mass, and is also preferably not more than 15% by mass, more preferably not more than 10% by mass, even more preferably not more than 9% by mass and further even more preferably not more than 8% by mass.

The content of the pigment-containing polymer particles (solid components) in the ink is preferably not less than 3.0% by mass, more preferably not less than 4.0% by mass and even more preferably not less than 6.0% by mass, and is also preferably not more than 30% by mass, more preferably not more than 20% by mass, even more preferably not more than 18% by mass and further even more preferably not more than 15% by mass.

The content of water in the ink is preferably not less than 30% by mass, more preferably not less than 40% by mass and even more preferably not less than 50% by mass, and is also preferably not more than 80% by mass, more preferably not more than 75% by mass and even more preferably not more than 70% by mass.

In the case where the water-based ink contains the water-soluble organic solvent, the content of the organic solvent in the ink is preferably not less than 5% by mass, more preferably not less than 10% by mass and even more preferably not less than 20% by mass, and is also preferably not more than 60% by mass, more preferably not more than 50% by mass and even more preferably not more than 40% by mass.

[Ink Set for Ink-Jet Printing]

The ink set for ink-jet printing according to the present invention (hereinafter also referred to merely as an "ink set") contains an aqueous composition containing the carbodiimide compound and water, and a water-based ink containing the pigment and the vinyl polymer, in which the vinyl polymer is a carboxyl group-containing polymer having an acid value of not more than 70 mgKOH/g, the vinyl polymer comprises a constitutional unit derived from an ionic monomer and a constitutional unit derived from a hydrophobic monomer, wherein the hydrophobic monomer is at least an aromatic group-containing monomer, the vinyl polymer is in the form of a crosslinked polymer; and the pigment and the vinyl polymer are present in the form of pigment-containing polymer particles.

The aforementioned ink set is loaded, for example, into ink cartridges for respective colors in an ink-jet printing apparatus, so that (i) the respective ink cartridges are filled with the aqueous composition containing the carbodiimide compound and water, and either the water-based ink containing the pigment and the vinyl polymer or the water-based ink containing the pigment-containing vinyl polymer particles, and by ejecting the aqueous ink and the water-based ink in the form of ink droplets from respective ejection nozzles corresponding to the respective ink cartridges, it is possible to to print characters or images, or (ii) the respective ink cartridges are filled with the water-based inks that each contain the carbodiimide compound, either the pigment and the vinyl polymer or the pigment-containing vinyl polymer particles, and water, and by ejecting the water-based inks in the form of ink droplets from respective ejection nozzles corresponding to the respective ink cartridges, it is possible to print characters or images.

As the aforementioned water-based ink, the water-based ink having a single kind of hue may be used alone, or water-based inks having two or more kinds of hues may be used in combination with each other.

[Ink-Jet Printing Method]

From the viewpoint of improving rub fastness of the resulting printed material, the ink-jet printing method of the present invention includes the following steps 1 and 2.

> Step 1: ejecting the carbodiimide compound, the pigment, the vinyl polymer and water onto a surface of a printing medium by an ink-jetting method to print characters or images thereon, said vinyl polymer being a carboxyl group-containing polymer having an acid value of not more than 70 mgKOH/g, and said pigment being present in the form of pigment-containing polymer particles; and
> Step 2: subjecting the characters or images printed in the step 1 to heat treatment at a temperature of not lower than 50°C and not higher than 200°C.

(Step 1)

The step 1 is the step of ejecting the carbodiimide compound, the pigment, the vinyl polymer and water onto the surface of the printing medium by an ink-jetting method to print characters or images thereon.

In the step 1, the water-based ink containing the carbodiimide compound, the pigment-containing polymer particles and water is ejected onto the printing medium by an ink-jetting method

In this case, the step 1 may further include the step 1a of ejecting the water-based ink containing either the pigment and the vinyl polymer or the pigment-containing polymer particles onto the printing medium by an ink-jetting method and the step 1b of ejecting the aqueous composition containing the carbodiimide compound and water onto the printing medium by an ink-jetting method. In such a case, it is preferred that the step 1a is conducted before or simultaneously with the step 1b, and it is more preferred that the step 1a is conducted before the step 1b.

By conducting the step 1a before the step 1b, it is possible to more effectively obtain a printed material that is excellent in rub fastness. In this case, the elapsed time period from the time at which the water-based ink is applied to the printing medium to the time at which the aqueous composition is applied to the printing medium is not particularly limited.

The pigment may be incorporated in the water-based ink, the carbodiimide compound may be incorporated in at least one of the water-based ink and the aqueous composition, and the vinyl polymer may also be incorporated in at least one of the water-based ink and the aqueous composition. Among these combinations of the water-based ink and the aqueous composition, preferred are the combination of the aqueous composition containing the carbodiimide compound and the water-based ink containing the polyester resin, and the combination of the water-based inks respectively containing the carbodiimide compound and the vinyl polymer.

The ink-jetting method of ejecting the aqueous composition and the water-based ink is preferably a piezoelectric method from the viewpoint of improving ejection properties thereof.

The amount of the water-based ink applied onto the printing medium in terms of a solid content thereof is preferably not less than $0.5 \text{ g/m}^2$, more preferably not less than $1.5 \text{ g/m}^2$ and even more preferably not less than $2.0 \text{ g/m}^2$, and is also preferably not more than $10 \text{ g/m}^2$, more preferably not more than $7.5 \text{ g/m}^2$ and even more preferably not more than 5.0 g/m$^2$, from the viewpoint of improving rub fastness of the resulting printed material.

(Step 2)

The step 2 is the step of subjecting the characters or images printed in the step 1 to heat treatment at a temperature of not lower than 50°C and not higher than 200°C. By subjecting the printing medium on which the characters or images are printed to the heat treatment, it is possible to allow the crosslinking reaction between the carbodiimide compound and the carboxy group-containing vinyl polymer to proceed, and thereby form a firm coating film of the ink.

The method of conducting the heat treatment is not particularly limited. The heat treatment may be conducted by (i) a method of applying a hot air to the surface of the printing medium to heat the printed characters or images formed thereon, (ii) a method of approaching a heater to the surface of the printing medium to heat the printed characters or images formed thereon, (iii) a method of bringing a heater into contact with a surface of the printing medium opposed to its surface on which the printed characters or images are formed, to heat the printed characters or images thereon, (iv) a method of heating the printed characters or images formed on the surface of the printing medium by steam curing using a high-temperature steam under an ordinary pressure or under a high pressure, and the like.

The heating temperature is preferably not lower than 90°C, more preferably not lower than 100°C and even more preferably not lower than 110°C, and is also preferably not higher than 200°C, more preferably not higher than 170°C and even more preferably not higher than 150°C. In the case where a shrink film is used as the printing medium, by heating the shrink film that is kept in such a state as attached to an aimed object, it is possible to conduct the crosslinking reaction of the printed characters or images and adhesion of the shrink film to the object by shrinkage thereof at the same time only during the single step.

The heating time is preferably not less than 1 minute, more preferably not less than 3 minutes and even more preferably not less than 5 minutes, and is also preferably not more than 30 minutes, more preferably not more than 20 minutes and even more preferably not more than 15 minutes.

Furthermore, it is preferred that before conducting the step 2, the step of drying the printed characters or images obtained in the step 1 is conducted. In the drying step, the crosslinking reactions between the carbodiimide compound and the vinyl polymer and between these compounds and the other resin(s) are allowed to proceed, so that the printed characters or images can be efficiently subjected to the crosslinking reactions in a stepwise manner.

The drying temperature is preferably not lower than 30°C and more preferably not lower than 40°C, and is also preferably lower than 100°C, more preferably not higher than 80°C and even more preferably not higher than 60°C. In the case where the drying temperature is not lower than 50°C, the drying treatment may also act as the aforementioned heat treatment.

The drying time is preferably not less than 1 minute and more preferably not less than 2 minutes, and is also preferably not more than 20 minutes, more preferably not more than 10 minutes and even more preferably not more than 5 minutes.

The printing medium used in the ink-jet printing method of the present invention is not particularly limited.

Examples of the printing medium used herein include a high-water absorbing plain paper, a low-water absorbing coated paper and a low-water absorbing resin film. Among these printing media, from the viewpoint of improving commercial or industrial printing capability, preferred are a low-water absorbing coated paper and a low-water absorbing resin film, and more preferred is a low-water absorbing resin film.

The term "low-water absorbing" of the printing medium as used herein means a concept including both of low-water absorbing properties and non-water absorbing properties of the printing medium against water and/or the ink, and the "low-water absorbing" may be evaluated by absorption of pure water to the printing medium. More specifically, the "low-water absorbing" means that the water absorption of the printing medium as measured by contacting the printing medium with pure water for 100 milliseconds is not less than 0 g/m$^2$ and not more than 10 g/m$^2$, and preferably not less than 0 g/m$^2$ and not more than 6 g/m$^2$.

Specific examples of the coated paper include a versatile glossy coated paper, a multi-color foam glossy coated paper, and the like.

As the resin film, preferred is at least one film selected from a polyester film, a polyvinyl chloride film, a polypropylene film and a polyethylene film. The surface of the resin film on which the printed characters or images are to be formed may be subjected to corona treatment.

Specific examples of commercially available products of the resin film include "LUMIRROR T60" (polyester) available from Toray Industries Inc., "PVC80B P" (polyvinyl chloride) available from Lintec Corporation, "KINATH KEE 70CA" (polyethylene) available from Lintec Corporation, "YUPO SG90 PAT1" (polypropylene) available from Lintec Corporation, "FOR" and "FOA" (polypropylene) both available from Futamura Chemical Co, Ltd., "BONYL RX" (nylon) available from Kohjin Film & Chemicals Co., Ltd., "EMBLEM ONBC" (nylon) available from UNITIKA Ltd., and the like.

Examples of the shrink film that undergoes shrinkage upon heating include films formed of at least one thermoplastic resin selected from polyester-based resins; styrene-based resins such as polystyrene, a styrene-butadiene copolymer, etc.; polylactic acids; polyolefin-based resins such as polyethylene, polypropylene, etc.; vinyl chloride-based resins; a mixture of any two or more of these resins; and the like, as well as a laminated film of these films.

Specific examples of commercially available products of the shrink film include "SPACECLEAN S7042" available from TOYOBO Co., Ltd.; "DXL" series products, "HISHIPET" series products, "PLABIO" series products and "HYBREX DL" series products all available from Mitsubishi Chemical Corporation; "BONSET" series products available from C.I. TAKIRON Corporation; "FANCYWRAP PET" series products available from GUNZE Ltd.; and the like.

EXAMPLES

In the following Production Examples, Preparation Examples, Examples and Comparative Examples, the "part(s)" and "%" indicate "part(s) by mass" and "% by mass", respectively, unless otherwise specified. The properties of the polymers, etc., were measured by the following methods.

(1) Measurement of Weight-Average Molecular Weight of Polymer

The weight-average molecular weight of the polymer was measured by gel chromatography [GPC apparatus: "HLC-8320GPC" available from Tosoh Corporation; columns: "TSKgel Super AWM-H", "TSKgel Super AW3000" and "TSKgel guard column Super AW-H" all available from Tosoh Corporation; flow rate: 0.5 mL/min] using a solution prepared by dissolving phosphoric acid and lithium bromide in *N,N-dimethylformamide* such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the resin with 10 mL of the aforementioned eluent in a glass vial, stirring the resulting mixture with a magnetic stirrer at 25°C for 10 hours, and then subjecting the mixture to filtration treatment through a syringe filter "DISMIC-13HP PTFE" (0.2 $\mu$m) available from Advantec Co., Ltd.

(2) Measurement of Acid Value of Polymer

In an automatic potentiometric titrator (power burette; "Model No.: APB-610") available from Kyoto Electronics Manufacturing Co., Ltd., the polymer was dissolved in a titrant solution prepared by mixing toluene and acetone (2:1), and the resulting solution was subjected to titration with a 0.1N potassium hydroxide/ethanol solution by a potentiometric titration method until reaching an end point of the titration observed as an inflection point of the titration curve. The acid value of the polymer was calculated from an amount (titer) of the potassium hydroxide solution used in the titration until reaching the end point.

(3) Measurement of Solid Content of Water Dispersion

Using an infrared moisture meter "FD-230" available from Kett Electric Laboratory, 5 g of a sample to be measured was dried at a drying temperature of 150°C under a measuring mode 96 (monitoring time: 2.5 minutes/variation range: 0.05%), and then a water content (%) of the sample to be measured was measured to calculate a solid content thereof according to the following formula.

Solid Content (%) = 100 - Water Content (%) of Sample to be Measured

(4) Measurement of Average Particle Size of Pigment-Containing Polymer Particles

The cumulant analysis of the particles was conducted using a laser particle analyzing system "ELS-8000" available from Otsuka Electrics Co., Ltd., to measure an average particle size thereof. In the measurement, there was used a dispersion diluted with water such that a concentration of the particles to be measured in the dispersion was adjusted to about 5 x $10^{-3}$% by weight. The measurement was conducted under the conditions including a temperature of 25°C, an angle between incident light and detector of 90° and a cumulative number of 100 times, and a refractive index of water (1.333) was input to the analyzing system as a refractive index of the dispersing medium. The thus measured cumulant average particle size was defined as respective average particle sizes of the pigment-containing polymer particles and the polymer particles.

(5) Measurement of Water Solubility Rate of Epoxy Compound

A glass tube (25 mmφ in diameter x 250 mm in height) was charged with 90 parts of ion-exchanged water and 10 parts of an epoxy compound at room temperature (25°C). The glass tube thus charged was allowed to stand for 1 hour in a thermostatic bath adjusted to a water temperature of 25°C. Next, the contents of the glass tube were vigorously shaken for 1 minute, and then the glass tube was placed again in the thermostatic bath, followed by allowing the glass tube to stand in the thermostatic bath for 12 hours. Next, undissolved components in the glass tube were separated and dried, and then a mass of the dried product was measured to calculate a water solubility rate (% by mass) of the epoxy compound.

(6) Measurement of Epoxy Equivalent of Epoxy Compound

The epoxy equivalent of the epoxy compound was measured by a potentiometric titration method using an automatic potentiometric titrator "AT-610" available from Kyoto Electronics Manufacturing Co., Ltd., according to JIS K7236.

Production Examples 1 and 2 (Production of Water-Insoluble Vinyl Polymers P-1 and P-2)

The monomers, solvent and polymerization chain transfer agent shown in the column "Initially Charged Monomer Solution" in Table 1 or 2 were charged into a reaction vessel equipped with two dropping funnels 1 and 2 and mixed with each other, and an inside atmosphere of the reaction vessel was replaced with nitrogen gas, thereby obtaining an initially charged monomer solution.
On the other hand, the monomers, solvent, polymerization initiator and polymerization chain transfer agent shown in the column "Dropping Monomer Solution 1" in Table 1 or 2 were mixed with each other to obtain a dropping monomer solution 1. The thus obtained dropping monomer solution 1 was charged into the dropping funnel 1, and an inside atmosphere of the dropping funnel 1 was replaced with nitrogen gas.
Also, the monomers, solvent, polymerization initiator and polymerization chain transfer agent shown in the column "Dropping Monomer Solution 2" in Table 1 were mixed with each other to obtain a dropping monomer solution 2. The thus obtained dropping monomer solution 2 was charged into the dropping funnel 2, and an inside atmosphere of the dropping funnel 2 was replaced with nitrogen gas.
In a nitrogen atmosphere, the initially charged monomer solution in the reaction vessel was maintained at 77°C while stirring, and the dropping monomer solution 1 in the dropping funnel 1 was gradually added dropwise to the reaction vessel over 3 hours. Next, the dropping monomer solution 2 in the dropping funnel 2 was gradually added dropwise to the reaction vessel over 2 hours. After completion of the dropwise addition, the mixed solution in the reaction vessel was stirred at 77°C for 0.5 hour. Then, a polymerization initiator solution prepared by dissolving 0.6 part of the polymerization initiator in 27.0 parts of methyl ethyl ketone was added to the mixed solution, and the resulting reaction solution was aged at 77°C for 1 hour while stirring. The aforementioned procedure including the preparation and addition of the polymerization initiator solution and the aging of the reaction solution was repeated five more times. Then, while maintaining the reaction solution in the reaction vessel at 80°C for 1 hour, methyl ethyl ketone was added thereto, thereby obtaining a solution of a water-insoluble polymer P-1 (solid content: 40.8%).
The weight-average molecular weight of the resulting water-insoluble vinyl polymer P-1 (as shown in Table 1) was 52,700, and the weight-average molecular weight of the resulting water-insoluble vinyl polymer P-2 (as shown in Table 2) was 14,100.
Meanwhile, the details of the respective monomers and polymerization initiators shown in Tables 1 and 2 were as follows.

- Styrene macromer: "AS-6(S)" (active ingredient content: 50%; number-average molecular weight: 6000) available from Toagosei Co., Ltd.
- TM-40G: Methoxy polyethylene glycol monomethacrylate "NK ESTER TM-40G" (average molar number of addition of ethyleneoxide: 4; end group: methoxy group) available from Shin-Nakamura Chemical Co., Ltd.
- V-65: 2,2'-Azobis(2,4-dimethylvaleronitrile) as a water-soluble azo polymerization initiator available from FUJIFILM Wako Pure Chemical Corporation
- V-501: 4,4'-Azobis(4-cyanovaleric acid) as a water-soluble azo polymerization initiator available from FUJIFILM Wako Pure Chemical Corporation

TABLE 1: Water-Insoluble Vinyl Polymer P-1

| | | Initially charged monomer solution (part(s)) | Dropping monomer solution 1 (part(s)) | Dropping monomer solution 2 (part(s)) |
|---|---|---|---|---|
| (a) Ionic monomer | Methacrylic acid | - | 31.2 | 12.8 |
| (b) Hydrophobic monomer | Styrene | 17.6 | 140.8 | 17.6 |
| | Styrene macromer | 12.0 | 108.0 | - |
| (c) Hydrophilic nonionic monomer | TM-40G | 10.0 | 80.0 | 10.0 |
| Solvent | Methyl ethyl ketone | 6.0 | 66.0 | 48.0 |
| Polymerization initiator | V-65 | - | 3.2 | 0.8 |
| Polymerization chain transfer agent | 2-Mercaptoethanol | 0.08 | 0.56 | 0.16 |

TABLE 2: Water-Insoluble Vinyl Polymer P-2

| | | Initially charged monomer solution (part(s)) | Dropping monomer solution 1 (part(s)) |
|---|---|---|---|
| (a) Ionic monomer | Acrylic acid | 0.5 | 4.5 |
| (b) Hydrophobic monomer | Styrene | 19.5 | 175.5 |
| Solvent | Methyl ethyl ketone | 20.0 | 180.0 |
| Polymerization initiator | V-501 | - | 3.0 |
| Polymerization chain transfer agent | 2-Mercaptopropionic acid | 0.4 | 3.6 |

Preparation Example A1 (Preparation of Water Dispersion 1 of Pigment-Containing Polymer Particles)

(1) Step 1 (Pigment Dispersing Step)

In a 2 L-capacity container, 42.9 g of the vinyl polymer P-1 was dissolved in 126.2 g of methyl ethyl ketone (MEK), and a 5N sodium hydroxide aqueous solution was added to the resulting polymer solution such that 60 mol% of an acid value of the polymer was neutralized. Then, 379.5 g of ion-exchanged water was further added dropwise to the polymer solution over 30 minutes, and the resulting reaction solution was stirred and mixed at a temperature of not lower than 10°C and not higher than 15°C using a disper blade operated at 1,500 r/min for 15 minutes.

Successively, 100 g of carbon black "MONARCH 717" available from Cabot Corporation was added to the reaction solution, and the resulting mixture was stirred and mixed at a temperature of not lower than 10°C and not higher than 15°C using a disper blade operated at 6,500 r/min for 2 hours to thereby obtain a preliminary dispersion.

The resulting preliminary dispersion was subjected to filtration treatment through a 200-mesh filter, and then diluted by adding 31.1 g of ion-exchanged water thereto. Thereafter, the thus obtained diluted dispersion was subjected to dispersion treatment under a pressure of 150 MPa using a Microfluidizer "M-110EH-30XP" (high-pressure homogenizer) available from Microfluidics Corporation by passing the dispersion through the device 15 times, thereby obtaining a dispersion of pigment-containing polymer particles a-1.

(2) Step 2 (Organic Solvent Removal Step)

A 2 L eggplant-shaped flask was charged with a whole amount of the dispersion obtained in the step 1, and then ion-exchanged water was added thereto such that a solid content of the dispersion was adjusted to 15%. The resulting dispersion was maintained under a pressure of 0.09 MPa (abs) in a warm water bath adjusted to 32°C for 3 hours using a rotary distillation apparatus "Rotary Evaporator N-1000S" available from Tokyo Rikakikai Co., Ltd., operated at a rotating speed of 50 r/min to remove the organic solvent therefrom. Furthermore, the temperature of the warm water bath was adjusted to 62°C, and the pressure in the apparatus was reduced to 0.07 MPa (abs), and the resulting reaction solution was concentrated under this condition until a solid content of the reaction solution became 25%, thereby obtaining a water dispersion.

(3) Step 3 (Crosslinking Treatment Step)

The water dispersion thus obtained in the step 2 was charged into a 500 mL angle rotor, and subjected to centrifugal separation using a high-speed cooling centrifuge "himac CR22G" (temperature set: 20°C) available from Hitachi Koki Co., Ltd., at 3,660 r/min for 20 minutes. Thereafter, the obtained solid components were mixed with ion-exchanged water to adjust a solid content of the resulting mixture to 20%. One hundred parts of the thus obtained water dispersion was charged into a threaded neck glass bottle, and then the glass bottle was further charged with 0.29 part of trimethylolpropane polyglycidyl ether "DENACOL EX-321L" (molecular weight: 302; water solubility rate: 27%; epoxy equivalent: 140) as a crosslinking agent available from Nagase ChemteX Corporation, and hermetically sealed with a cap. The contents of the glass bottle were heated at 70°C for 5 hours while stirring with a stirrer. After the elapse of 5 hours, the contents of the glass bottle were cooled to room temperature, and then subjected to filtration treatment using a 25 mL-capacity needleless syringe available from Terumo Corporation fitted with a 5 $\mu$m-pore size filter (acetyl cellulose membrane; outer diameter: 2.5 cm) available from FUJIFILM Wako Pure Chemical Corporation, followed by adding ion-exchanged water to the resulting filtered product to adjust a solid content thereof to 20%, thereby obtaining a water dispersion 1 of pigment-containing polymer particles.

The average particle size of the thus obtained pigment-containing polymer particles A-1 was 97 nm, and the acid value of the polymer constituting the pigment-containing polymer particles A-1 was 65 mgKOH/g. The results are shown in Table 3.

Preparation Examples A2 to A4 (Preparation of Water Dispersions 2 to 4 of Pigment-Containing Polymer Particles)

The same procedure as in Preparation Example A1 was repeated except that the pigment used therein was replaced with the other ones, thereby obtaining water dispersions 2 to 4 of pigment-containing polymer particles. The results are shown in Table 3.

Preparation Example A5 (Preparation of Water Dispersion 5 of Pigment-Containing Polymer Particles)

The same procedure as in Preparation Example A1 was repeated except that the polymer P-1 was replaced with the polymer P-2, and the concentrated solution obtained in the step (2) was subjected, without conducting the step (3), to filtration treatment using a 25 mL-capacity needleless syringe fitted with a 5 $\mu$m-pore size filter, followed by adding ion-exchanged water to the resulting filtered product to adjust a solid content thereof to 20%, thereby obtaining a water dispersion 5 of pigment-containing polymer particles. The results are shown in Table 3.

Preparation Example A6 (Preparation of Water dispersion 6 of Pigment-Containing Polymer Particles)

In a glass container, 25 parts of an emulsion of a water-soluble styrene-acrylic acid polymer "JONCRYL 690" (solid content: 20%; weight-average molecular weight: 16500; acid value: 240 mgKOH/g) as an anionic group-containing resin available from BASF Japan, Ltd., and 78.6 parts of MEK were mixed with each other. Then, 5.1 parts of a 5N sodium hydroxide aqueous solution (sodium hydroxide solid component: 16.9%; for volumetric titration) available from FUJIFILM Wako Pure Chemical Corporation were further added into the resulting mixture to neutralize the resin such that a ratio of the number of moles of sodium hydroxide to the number of moles of anionic groups of the anionic group-containing resin was 20% (neutralization degree: 20%). Furthermore, 400 parts of ion-exchanged water were added to the mixture, and then 75 parts of carbon black "MONARCH 717" available from Cabot Corporation were added thereto, thereby obtaining a pigment mixture. The thus obtained pigment mixture was stirred at 20°C for 60 minutes using a disper "ULTRA DISPER" (tradename) available from Asada Iron Works Co., Ltd., while operating a disper blade thereof at a rotating speed of 7000 rpm. The resulting dispersion was charged into "Ultra Apex Mill UAM05 Type" available from HIROSHIMA METAL & MACHINERY Co., Ltd., packed with zirconia beads "YTZ Ball" having a bead diameter of 0.05 mm available from Nikkato Corporation at a packing rate of 85%, and subjected to dispersion treatment therein at a rotating speed of 2350 rpm for 1 hour. At this time, the reaction vessel was controlled to a temperature of from 10 to 15°C. After the elapse of 1 hour, the contents of the reaction vessel were maintained at 60°C under reduced pressure using a rotary evaporator to remove MEK therefrom, followed by further removing a part of water therefrom to measure a solid content thereof. The resulting dispersion was subjected to filtration treatment using a 25 mL-capacity needleless syringe available from Terumo Corporation fitted with a 5 $\mu$m-pore size filter (acetyl cellulose membrane; outer diameter: 2.5 cm) available from FUJIFILM Wako Pure Chemical Corporation, followed by adding ion-exchanged water to the resulting filtered product to adjust a solid content thereof to 20%, thereby obtaining a water dispersion 6 of pigment-containing polymer particles. The results are shown in Table 3.

Preparation Example A7 (Preparation of Water Dispersion 7 of Pigment-Containing Polymer Particles)

The same procedure as in Preparation Example A6 was repeated except that the carbon black used therein was replaced with C.I. Pigment Blue 15:3 "Chromofine Blue (CFB) 6338JC" available from Dainichiseika Color & Chemicals Mfg. Co., Ltd., thereby obtaining a water dispersion 7 of pigment-containing polymer particles. The results are shown in Table 3.

TABLE 3

| | Pigment water dispersion | Vinyl polymer | | Pigment | Average particle size (nm) |
|---|---|---|---|---|---|
| | | Kind | Acid value (mgKOH/g) | | |
| Preparation Example A1 | Water dispersion 1 | Crosslinked polymer P-1 | 65 | Carbon black "MONARCH 717" available from Cabot Corporation | 97 |
| Preparation Example A2 | Water dispersion 2 | Crosslinked polymer P-1 | 65 | C.I. Pigment Blue 15:3 "CFB6338JC" available from Dainichiseika Color & Chemicals Mfg. Co., Ltd. | 98 |
| Preparation Example A3 | Water dispersion 3 | Crosslinked polymer P-1 | 65 | C.I. Pigment Red 150 "FFC 522-1D" available from Fuji Pigment Co., Ltd. | 163 |
| Preparation Example A4 | Water dispersion 4 | Crosslinked polymer P-1 | 65 | C.I. Pigment Yellow 155 "IJY4GC" available from Clariant Corporation | 158 |
| Preparation Example A5 | Water dispersion 5 | Polymer P-2 | 43 | C.I. Pigment Blue 15:3 "CFB6338JC" available from Dainichiseika Color & Chemicals Mfg. Co., Ltd. | 120 |
| Preparation Example A6 | Water dispersion 6 | "JONCRYL 690" | 240 | Carbon black "MONARCH 717" available from Cabot Corporation | 101 |
| Preparation Example A7 | Water dispersion 7 | "JONCRYL 690" | 240 | C.I. Pigment Blue 15:3 "CFB6338JC" available from Dainichiseika Color & Chemicals Mfg. Co., Ltd. | 104 |

Preparation Examples B1 to B7 (Preparation of Water-Based Inks 1 to 7)

The respective water dispersions 1 to 7 obtained in Preparation Examples A1 to A7, the organic solvents, the surfactant and ion-exchanged water were compounded with each other in the amounts shown in Table 4 (such that a total amount of these components was 100%), thereby obtaining water-based inks 1 to 7.

Incidentally, the amounts of the respective pigment water dispersions compounded as shown in Table 4 were in terms of solid contents thereof.

TABLE 4

| | | | Preparation Examples | | | | | | |
|---|---|---|---|---|---|---|---|---|---|
| | | | B1 | B2 | B3 | B4 | B5 | B6 | B7 |
| No. of water-based ink | | | 1 | 2 | 3 | 4 | 5 | 6 | 7 |
| Composition of water-based ink (%) | Pigment water dispersion | Water dispersion 1 (black) | 10 | - | - | - | - | - | - |
| | | Water dispersion 2 (cyan) | - | 10 | - | - | - | - | - |
| | | Water dispersion 3 (magenta) | - | - | 10 | - | - | - | - |
| | | Water dispersion 4 (yellow) | - | - | - | 10 | - | - | - |
| | | Water dispersion 5 (cyan) | - | - | - | - | 10 | - | - |
| | | Water dispersion 6 (black) | - | - | - | - | - | 10 | - |
| | | Water dispersion 7 (cyan) | - | - | - | - | - | - | 10 |
| | Organic solvent: PG | | 30 | 30 | 30 | 30 | 30 | 30 | 30 |

(continued)

| | | Preparation Examples | | | | | | |
| | | B1 | B2 | B3 | B4 | B5 | B6 | B7 |
|---|---|---|---|---|---|---|---|---|
| No. of water-based ink | | 1 | 2 | 3 | 4 | 5 | 6 | 7 |
| | Organic solvent: BDG | 5 | 5 | 5 | 5 | 5 | 5 | 5 |
| | Surfactant: KF6011 | 0.5 | 0.5 | 0.5 | 0.5 | 0.5 | 0.5 | 0.5 |
| | Ion-exchanged water | bal.* | bal.* | bal.* | bal.* | bal.* | bal.* | bal.* |
| Note bal.*: Balance | | | | | | | | |

The details of the organic solvents and the surfactant shown in Table 4 are as follows.

- PG: Propylene glycol available from FUJIFILM Wako Pure Chemical Corporation
- BDG: Diethylene glycol monobutyl ether available from FUJIFILM Wako Pure Chemical Corporation
- KF6011: Alkylene glycol-modified polydimethylsiloxane "KF-6011" (tradename; nonionic surfactant) available from Shin-Etsu Chemical Co., Ltd.

Preparation Examples C1 and C2 (Preparation of Aqueous Compositions 1 and 2)

The respective carbodiimide compounds, the organic solvent, the surfactant and ion-exchanged water shown in Table 5 were compounded with each other in the amounts shown in Table 5 (such that a total amount of these components was 100%), thereby obtaining aqueous compositions 1 and 2.

Incidentally, the amounts of the respective carbodiimide compounds compounded as shown in Table 5 were in terms of solid contents thereof.

TABLE 5

| | | Preparation Examples | |
| | | C1 | C2 |
|---|---|---|---|
| No. of aqueous composition | | 1 | 2 |
| Composition (%) | CARBODILITE E-02 | 1 | - |
| | CARBODILITE V-04 | - | 1 |
| | Organic solvent: PG | 40 | 40 |
| | Surfactant: KF6011 | 0.5 | 0.5 |
| | Ion-exchanged water | Balance | Balance |

The details of the carbodiimide compounds, etc., shown in Table 5 are as follows.

- CARBODILITE E-02: Polycarbodiimide (appearance: emulsion; carbodiimide group equivalent: 445; active ingredient content: 40%; available from Nisshinbo Chemical Inc.; tradename)
- CARBODILITE V-04: Polycarbodiimide (appearance: aqueous solution; carbodiimide group equivalent: 335; active ingredient content: 40%; available from Nisshinbo Chemical Inc.; tradename)
- PG: Propylene glycol available from FUJIFILM Wako Pure Chemical Corporation
- KF6011: Alkylene glycol-modified polydimethylsiloxane "KF-6011" (tradename; nonionic surfactant) available from Shin-Etsu Chemical Co., Ltd.

Examples 1 to 10 and Comparative Examples 1 to 3 (Printing Operations Using Ink Sets)

Ink sets each constituted of a combination of the aqueous composition and the water-based ink shown in Table 6 were respectively loaded to an ink-jet printer "IPSiO SG2010L" available from Ricoh Co., Ltd., to print a solid image having a size of 10 cm x 10 cm on a polyethylene terephthalate (PET) film "LUMIRROR (registered trademark) 75T60" as a printing medium available from Toray Industries, Inc.

After that, the resulting printed material was dried at 60°C for 10 minutes under ordinary pressures, and then subjected to heat treatment at 120°C for 10 minutes. Thereafter, the printed material was allowed to stand at room temperature for 10 hours for drying, and then evaluated for rub fastness by the following method.

Incidentally, in Examples 1 to 5 and Comparative Examples 2 and 3, the two liquids including the aqueous composition and the water-based ink were loaded to the ink-jet printer, and the printing operation was conducted such that the aqueous composition and the water-based ink were separately ejected with the same droplet size from respective two ink-jet print heads of the ink-jet printer, and then both the liquids were mixed with each other on the printing medium.

In Examples 6 to 10, the aqueous composition and the water-based ink were mixed with each other at a mass ratio of 1:1 to prepare a water-based ink containing the carbodiimide compound, the polyester resin, the pigment and water, and one more water-based ink having the same composition was further prepared. The two water-based inks were loaded to the ink-jet printer, and the printing operation was conducted such that the two water-based inks were ejected with the same droplet size from respective two ink-jet print heads of the ink-jet printer.

In Comparative Example 1, two water-based inks having the same composition were prepared, and the printing operation was conducted in the same manner as in Examples 6 to 10 such that the two water-based inks were ejected with the same droplet size from the respective two ink-jet print heads of the ink-jet printer.

In addition, the amount of the aqueous composition applied was from 0.2 to 1.2 g per 1 m$^2$ of the 100%-density solid image in terms of a solid content thereof, and the amount of the ink applied was from 1.0 to 2.0 g per 1 m$^2$ of the 100%-density solid image in terms of a solid content thereof.

[Evaluation of Rub Fastness]

The printed surface of the resulting printed material was rubbed with a cellulose nonwoven fabric "BEMCOT (registered trademark) M3-II" available from Asahi Kasei Fiber K.K., impregnated with 100% ethanol while applying a load of 100 g/cm$^2$ thereonto, and the conditions of the printed surface and the nonwoven fabric were visually observed to count the number of the rubbing motions until migration of the color of the ink to the cellulose nonwoven fabric occurred.

If the evaluation rating of the rub fastness (the number of rubbing motions) was not less than 5, the printed material was regarded as being sufficient in rub fastness.

TABLE 6

| | Water-based ink | | Aqueous composition | Printing method | Rub fastness (number of rubbing motions) |
|---|---|---|---|---|---|
| | Kind of ink | Kind of polymer (acid value) | | | |
| Example 1 | Ink 1 (black) | Polymer P-1 (65) | Composition 1 | *2 | 8 |
| Example 2 | Ink 2 (cyan) | Polymer P-1 (65) | Composition 2 | *2 | 10 |
| Example 3 | Ink 3 (magenta) | Polymer P-1 (65) | Composition 1 | *2 | 9 |
| Example 4 | Ink 4 (yellow) | Polymer P-1 (65) | Composition 2 | *2 | 10 |
| Example 5 | Ink 5 (cyan) | Polymer P-2 (43) | Composition 1 | *2 | 23 |
| Example 6 | Ink 1 (black) | Polymer P-1 (65) | Composition 2 | *1 | 7 |
| Example 7 | Ink 2 (cyan) | Polymer P-1 (65) | Composition 1 | *1 | 10 |
| Example 8 | Ink 3 (magenta) | Polymer P-1 (65) | Composition 2 | *1 | 9 |
| Example 9 | Ink 4 (yellow) | Polymer P-1 (65) | Composition 1 | *1 | 10 |
| Example 10 | Ink 5 (cyan) | Polymer P-2 (43) | Composition 2 | *1 | 22 |
| Comparative Example 1 | Ink 1 (black) | Polymer P-1 (65) | - | - | 1 |
| Comparative Example 2 | Ink 6 (black) | "JONCRYL 690" (240) | Composition 1 | *2 | 1 |

(continued)

| | Water-based ink | | Aqueous composition | Printing method | Rub fastness (number of rubbing motions) |
|---|---|---|---|---|---|
| | Kind of ink | Kind of polymer (acid value) | | | |
| Comparative Example 3 | Ink 7 (cyan) | "JONCRYL 690" (240) | Composition 2 | *2 | 1 |

Note *1: The water-based ink and the aqueous composition were previously mixed with each other at a mass ratio of 1:1, and loaded to a printer as one mixed liquid, and then the liquid was ejected from a single print head for conducting the printing.

*2: The water-based ink and the aqueous composition were respectively loaded to separate print heads of a printer, and separately ejected therefrom for conducting the printing.

Examples 1 to 5 were concerned with examples of the second embodiment, whereas Examples 6 to 10 were concerned with examples of the first embodiment.

From the results shown in Table 6, it was confirmed that according to the water-based ink, the ink set and the ink-jet printing method in which the carbodiimide compound and the carboxyl group-containing vinyl polymer having an acid value of not more than 70 mgKOH/g were used, it was possible to obtain the printed material that was excellent in rub fastness. On the other hand, in the Comparative Examples in which the carbodiimide compound or the carboxyl group-containing vinyl polymer having an acid value of not more than 70 mgKOH/g was not used, it was confirmed that any printed material that was excellent in rub fastness could not be obtained.

Industrial Applicability

According to the ink set and ink-jet printing method using the water-based ink of the present invention, it is possible to obtain a printed material that is excellent in rub fastness even when characters or images are printed on a non-water absorbing printing medium or a shrinkable printing medium.

**Claims**

1. A water-based ink for ink-jet printing, comprising a carbodiimide compound, a pigment, a vinyl polymer and water, in which:

   the vinyl polymer is a carboxyl group-containing polymer having an acid value of not more than 70 mgKOH/g;
   the vinyl polymer comprises a constitutional unit derived from an ionic monomer and a constitutional unit derived from a hydrophobic monomer, wherein the hydrophobic monomer is at least an aromatic group-containing monomer;
   the vinyl polymer is in the form of a crosslinked polymer; and
   the pigment and the vinyl polymer are present in the form of pigment-containing polymer particles.

2. The water-based ink for ink-jet printing according to claim 1, wherein a content of the vinyl polymer in the water-based ink is not less than 0.5% by mass and not more than 15% by mass.

3. The water-based ink for ink-jet printing according to claim 1 or 2, wherein a mass ratio of the carbodiimide compound to the vinyl polymer (carbodiimide compound/vinyl polymer) is not less than 0.01 and not more than 1.0.

4. The water-based ink for ink-jet printing according to any one of claims 1 to 3, wherein the vinyl polymer further comprises a constitutional unit derived from a hydrophilic nonionic monomer.

5. The water-based ink for ink-jet printing according to any one of claims 1 to 4, wherein the vinyl polymer is a polymer crosslinked with a polyfunctional epoxy compound.

6. The water-based ink for ink-jet printing according to claim 5, wherein the polyfunctional epoxy compound is a water-insoluble polyfunctional epoxy compound.

7. An ink set for ink-jet printing, comprising an aqueous composition comprising a carbodiimide compound and water, and a water-based ink comprising a pigment and a vinyl polymer, in which:

the vinyl polymer is a carboxyl group-containing polymer having an acid value of not more than 70 mgKOH/g; the vinyl polymer comprises a constitutional unit derived from an ionic monomer and a constitutional unit derived from a hydrophobic monomer, wherein the hydrophobic monomer is at least an aromatic group-containing monomer;
the vinyl polymer is in the form of a crosslinked polymer; and
the pigment and the vinyl polymer are present in the form of pigment-containing polymer particles.

8. The ink set for ink-jet printing according to claim 7, wherein the water-based ink set has two or more kinds of water-based inks having different colours.

9. An ink-jet printing method comprising the following steps 1 and 2:

Step 1: ejecting a carbodiimide compound, a pigment, a vinyl polymer and water onto a surface of a printing medium by an ink-jetting method to print characters or images thereon, said vinyl polymer being a carboxyl group-containing polymer having an acid value of not more than 70 mgKOH/g, said vinyl polymer comprises a constitutional unit derived from an ionic monomer and a constitutional unit derived from a hydrophobic monomer, wherein the hydrophobic monomer is at least an aromatic group-containing monomer, said vinyl polymer is in the form of a crosslinked polymer, and said pigment and vinyl polymer being present in the form of pigment-containing polymer particles; and
Step 2: subjecting the characters or images printed in the step 1 to heat treatment at a temperature of not lower than 50°C and not higher than 200°C.

10. A use of the water-based ink according to any one of claims 1 to 6 for ink-jet printing.

11. A use of the ink set according to claim 7 or 8 for ink-jet printing.


**Patentansprüche**

1. Wasserbasierte Tinte für den Tintenstrahldruck, umfassend eine Carbodiimidverbindung, ein Pigment, ein Vinylpolymer und Wasser, in welcher:

das Vinylpolymer ein Carboxylgruppen-haltiges Polymer mit einer Säurezahl von nicht mehr als 70 mgKOH/g ist; das Vinylpolymer eine Struktureinheit, abgeleitet von einem ionischen Monomer, und eine Struktureinheit, abgeleitet von einem hydrophoben Monomer, umfasst, worin das hydrophobe Monomer mindestens ein Aromaten-haltiges Monomer ist;
das Vinylpolymer in Form eines quervernetzten Polymers vorliegt; und
das Pigment und das Vinylpolymer in Form von pigmenthaltigen Polymerpartikeln vorliegen.

2. Wasserbasierte Tinte für den Tintenstrahldruck gemäß Anspruch 1, worin ein Gehalt des Vinylpolymers in der wasserbasierten Tinte nicht weniger als 0,5 Massen-% und nicht mehr als 15 Massen-% beträgt.

3. Wasserbasierte Tinte für den Tintenstrahldruck gemäß Anspruch 1 oder 2, worin ein Massenverhältnis der Carbodiimidverbindung zum Vinylpolymer (Carbodiimidverbindung/Vinylpolymer) nicht weniger als 0,01 und nicht mehr als 1,0 beträgt.

4. Wasserbasierte Tinte für den Tintenstrahldruck gemäß einem der Ansprüche 1 bis 3, worin das Vinylpolymer ferner eine Struktureinheit, abgeleitet von einem hydrophilen nichtionischen Monomer, umfasst.

5. Wasserbasierte Tinte für den Tintenstrahldruck gemäß einem der Ansprüche 1 bis 4, worin das Vinylpolymer ein mit einer polyfunktionellen Epoxyverbindung quervernetztes Polymer ist.

6. Wasserbasierte Tinte für den Tintenstrahldruck gemäß Anspruch 5, worin die polyfunktionelle Epoxyverbindung eine wasserunlösliche polyfunktionelle Epoxyverbindung ist.

7. Tintenset für den Tintenstrahldruck, umfassend eine wässrige Zusammensetzung, umfassend eine Carbodiimidverbindung und Wasser, und eine wasserbasierte Tinte, umfassend ein Pigment und ein Vinylpolymer, in welchem:

   das Vinylpolymer ein Carboxylgruppen-haltiges Polymer mit einer Säurezahl von nicht mehr als 70 mgKOH/g ist;
   das Vinylpolymer eine Struktureinheit, abgeleitet von einem ionischen Monomer, und eine Struktureinheit, abgeleitet von einem hydrophoben Monomer, umfasst, worin das hydrophobe Monomer mindestens ein Aromaten-haltiges Monomer ist;
   das Vinylpolymer in Form eines quervernetzten Polymers vorliegt; und
   das Pigment und das Vinylpolymer in Form von pigmenthaltigen Polymerpartikeln vorliegen.

8. Tintenset für den Tintenstrahldruck gemäß Anspruch 7, worin das wasserbasierte Tintenset zwei oder mehr Arten von wasserbasierten Tinten mit unterschiedlichen Farben aufweist.

9. Tintenstrahldruckverfahren, umfassend die folgenden Schritte 1 und 2:

   Schritt 1: Ausstoßen von einer Carbodiimidverbindung, einem Pigment, einem Vinylpolymer und Wasser auf eine Oberfläche eines Druckmediums durch ein Tintenstrahlverfahren, um Zeichen oder Bilder darauf zu drucken, wobei das Vinylpolymer ein Carboxylgruppen-haltiges Polymer mit einer Säurezahl von nicht mehr als 70 mgKOH/g ist, das Vinylpolymer eine Struktureinheit, abgeleitet von einem ionischen Monomer, und eine Struktureinheit, abgeleitet von einem hydrophoben Monomer, umfasst, worin das hydrophobe Monomer mindestens ein Aromaten-haltiges Monomer ist, das Vinylpolymer in Form eines quervernetzten Polymers vorliegt und das Pigment und das Vinylpolymer in Form von pigmenthaltigen Polymerpartikeln vorliegen; und
   Schritt 2: Unterwerfen der in Schritt 1 gedruckten Zeichen oder Bilder einer Wärmebehandlung bei einer Temperatur von nicht weniger als 50 °C und nicht mehr als 200 °C.

10. Verwendung der wasserbasierten Tinte gemäß einem der Ansprüche 1 bis 6 für den Tintenstrahldruck.

11. Verwendung des Tintensets gemäß Anspruch 7 oder 8 für den Tintenstrahldruck.


**Revendications**

1. Encre à base d'eau pour une impression à jet d'encre, comprenant un composé de carbodiimide, un pigment, un polymère vinylique et de l'eau, dans laquelle :

   le polymère vinylique est un polymère contenant un groupe carboxyle présentant un indice d'acide non supérieur à 70 mgKOH/g ;
   le polymère vinylique comprend un motif constitutif dérivé d'un monomère ionique et un motif constitutif dérivé d'un monomère hydrophobe, dans laquelle le monomère hydrophobe est au moins un monomère contenant un groupe aromatique ;
   le polymère vinylique se présente sous la forme d'un polymère réticulé ; et
   le pigment et le polymère vinylique sont présents sous la forme de particules de polymère contenant un pigment.

2. Encre à base d'eau pour une impression à jet d'encre selon la revendication 1, dans laquelle une teneur en polymère vinylique dans l'encre à base d'eau n'est pas inférieure à 0,5 % en masse et pas supérieure à 15 % en masse.

3. Encre à base d'eau pour une impression à jet d'encre selon la revendication 1 ou la revendication 2, dans laquelle un rapport massique entre le composé de carbodiimide et le polymère vinylique (composé de carbodiimide/polymère vinylique) n'est pas inférieur à 0,01 et n'est pas supérieur à 1,0.

4. Encre à base d'eau pour une impression à jet d'encre selon l'une quelconque des revendications 1 à 3, dans laquelle le polymère vinylique comprend en outre un motif constitutif dérivé d'un monomère non ionique hydrophile.

5. Encre à base d'eau pour une impression à jet d'encre selon l'une quelconque des revendications 1 à 4, dans laquelle le polymère vinylique est un polymère réticulé avec un composé époxy polyfonctionnel.

6. Encre à base d'eau pour une impression à jet d'encre selon la revendication 5, dans laquelle le composé époxy polyfonctionnel est un composé époxy polyfonctionnel insoluble dans l'eau.

**7.** Ensemble d'encres pour une impression à jet d'encre, comprenant une composition aqueuse comprenant un composé de carbodiimide et de l'eau et une encre à base d'eau comprenant un pigment et un polymère vinylique, dans lequel :

le polymère vinylique est un polymère contenant un groupe carboxyle présentant un indice d'acide non supérieur à 70 mgKOH/g ;
le polymère vinylique comprend un motif constitutif dérivé d'un monomère ionique et un motif constitutif dérivé d'un monomère hydrophobe, dans lequel le monomère hydrophobe est au moins un monomère contenant un groupe aromatique ;
le polymère vinylique se présente sous la forme d'un polymère réticulé ; et
le pigment et le polymère vinylique sont présents sous la forme de particules de polymère contenant un pigment.

**8.** Ensemble d'encres à base d'eau pour une impression à jet d'encre selon la revendication 7, dans lequel l'ensemble d'encres à base d'eau présente deux types, ou plus de deux types, d'encres à base d'eau présentant des couleurs différentes.

**9.** Procédé d'impression à jet d'encre comprenant les étapes 1 et *2 qui suivent :*

Étape 1 : éjection d'un composé de carbodiimide, d'un pigment, d'un polymère vinylique et d'eau sur une surface d'un support d'impression par un procédé à jet d'encre pour imprimer des caractères ou des images sur celui-ci, ledit polymère vinylique étant un polymère contenant un groupe carboxyle présentant un indice d'acide non supérieur à 70 mgKOH/g, ledit polymère vinylique comprend un motif constitutif dérivé d'un monomère ionique et un motif constitutif dérivé
d'un monomère hydrophobe, dans lequel le monomère hydrophobe est au moins un monomère contenant un groupe aromatique, ledit polymère vinylique se présente sous la forme d'un polymère réticulé et ledit pigment et ledit polymère vinylique étant présents sous la forme de particules de polymère contenant un pigment ; et
Étape 2 : soumission des caractères ou images imprimés lors de l'étape 1 à un traitement thermique à une température non inférieure à 50 °C et non supérieure à 200 °C.

**10.** Utilisation de l'encre à base d'eau selon l'une quelconque des revendications 1 à 6 pour une impression à jet d'encre.

**11.** Utilisation de l'ensemble d'encres selon la revendication 7 ou la revendication 8 pour une impression à jet d'encre.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007514809 A
- JP 2015193788 A
- US 2009226682 A1
- WO 2018138720 A1
- WO 2017009601 A1
- US 2018118965 A1
- WO 2006064193 A1
- WO 2011051711 A1